(19) Europäisches Patentamt / European Patent Office / Office européen des brevets

(11) **EP 4 251 428 B1**

(12) **EUROPEAN PATENT SPECIFICATION**

(45) Date of publication and mention of the grant of the patent:
**03.12.2025 Bulletin 2025/49**

(21) Application number: **21805663.8**

(22) Date of filing: **25.10.2021**

(51) International Patent Classification (IPC):
**B41M 5/382** *(2006.01)*    **B41J 2/475** *(2006.01)*
**B29C 64/141** *(2017.01)*    **B33Y 10/00** *(2015.01)*
**B33Y 30/00** *(2015.01)*    **B41J 2/14** *(2006.01)*
**B41J 2/44** *(2006.01)*

(52) Cooperative Patent Classification (CPC):
**B29C 64/141; B33Y 10/00; B33Y 30/00;**
**B41J 2/14104; B41J 2/475;** B41J 2/442

(86) International application number:
**PCT/JP2021/039316**

(87) International publication number:
**WO 2022/113607 (02.06.2022 Gazette 2022/22)**

(54) **IMAGE FORMING METHOD AND THREE-DIMENSIONAL OBJECT PRODUCING APPARATUS**

BILDERZEUGUNGSVERFAHREN UND VORRICHTUNG ZUR HERSTELLUNG DREIDIMENSIONALER OBJEKTE

MÉTHODE DE FORMATION D'IMAGE ET APPAREIL DE PRODUCTION D'OBJET TRIDIMENSIONNEL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.11.2020 JP 2020199077**

(43) Date of publication of application:
**04.10.2023 Bulletin 2023/40**

(73) Proprietor: **Ricoh Company, Ltd.**
**Tokyo 143-8555 (JP)**

(72) Inventors:
• **SUHARA, Hiroyuki**
**Tokyo 143-8555 (JP)**
• **AOTO, Jun**
**Tokyo 143-8555 (JP)**

(74) Representative: **SSM Sandmair**
**Patentanwälte Rechtsanwalt**
**Partnerschaft mbB**
**Joseph-Wild-Straße 20**
**81829 München (DE)**

(56) References cited:
**EP-A1- 3 886 141**    **US-A1- 2017 348 872**

• **TOLBERT W A ET AL: "LASER ABLATION TRANSFER IMAGING USING PICOSECOND OPTICAL PULSES: ULTRA-HIGH SPEED, LOWER THRESHOLD AND HIGH RESOLUTION", JOURNAL OF IMAGING SCIENCE AND TECHNOLOGY, SPIE - THE INTERNATIONAL SOCIETY FOR OPTICAL ENGINEERING, US, vol. 37, no. 5, 1 September 1993 (1993-09-01), pages 485 - 489, XP000403194, ISSN: 1062-3701**

## Description

### Technical Field

The present disclosure relates to a flying body generating method and a flying body generating apparatus, an image forming apparatus, and a three-dimensional object producing apparatus.

### Background Art

Because image forming apparatuses employing, for example, inkjet methods can fly ink droplets to desired positions, studies have been recently made into application of such image forming apparatuses to the field of 3D printers that produce three-dimensional objects, and to the field of printed electronics for producing electronic parts by printing techniques.

There is a need for flying not only low-viscosity inks used in existing image forming apparatuses but also high-viscosity materials such as inks having a high pigment concentration and conductive pastes containing conductors, accurately to desired positions. Hence, various techniques for flying high-viscosity materials have been proposed. As such techniques, techniques for flying inks using lasers have been explored. For example, Laser-Induced Forward Transfer (LIFT) methods using optical vortex lasers have been proposed (for example, see PTL 1). For example, the LIFT methods form a film (layer) of a transfer target material in a manner to be disposed on a substrate, irradiate the film of the transfer target material with laser beams to fly the transfer target material, and locate the transfer target material at a desired position of a substrate disposed counter to the film of the transfer target material.

Tolbert W A et al: "Laser ablation transfer imaging using picosecond optical pulses: Ultra-high speed, lower threshold and high resolution", Journal of Imaging Science and Technology, SPIE - The International Society for Optical Engineering, vol. 37, no.5, pages 485-489 extends high-resolution color image production by laser ablation transfer (LAT) to the picosecond time regime. The use of psec optical pulses is shown to result in an order-of-magnitude reduction of the pulse fluence threshold, whereby it is possible to produce images at ultra-high speed.

### Citation List

### Patent Literature

PTL 1: International Publication No. WO 2016/136722

### Summary of Invention

### Technical Problem

The present disclosure has an object to provide a flying body generating method that can attach a flying target material to a target while suppressing scattering of the flying target material flown.

### Solution to Problem

The invention is set out by the appended set of claims. The embodiments and/or examples of the following description which are not covered by the claims, are provided for illustrative purpose only and are only intended to assist the reader in understanding the present invention. However, such embodiments and/or examples which are not covered by the claims do not form part of the present invention that is solely defined by the claims.

### Advantageous Effects of Invention

The present disclosure can provide a flying body generating method that can attach a flying target material to a target while suppressing scattering of the flying target material flown.

### Brief Description of Drawings

[FIG. 1A]FIG. 1A is a diagram illustrating an example of a simulation image representing a temperature (energy) distribution of a Gaussian laser beam by contours.

[FIG. 1B]FIG. 1B is a diagram illustrating an example of an image representing a temperature (energy) distribution of a uniformly heating laser beam.

[FIG. 2]FIG. 2 is a graph plotting an example of laser beam cross-sectional intensity distributions of a Gaussian laser beam (dotted line) and a uniformly heating laser beam (solid line).

[FIG. 3A]FIG. 3A is an exemplary diagram illustrating an example of a cross-sectional intensity distribution of a uniformly heating laser beam.

[FIG. 3B]FIG. 3B is an exemplary diagram illustrating another example of a cross-sectional intensity distribution of a uniformly heating laser beam.

[FIG. 4A]FIG. 4A is an exemplary view illustrating an example of a LIFT method using an existing Gaussian laser beam.

[FIG. 4B]FIG. 4B is an exemplary view illustrating another example of a LIFT method using an existing Gaussian laser beam.

[FIG. 4C]FIG. 4C is an exemplary view illustrating another example of a LIFT method using an existing Gaussian laser beam.

[FIG. 4D]FIG. 4D is an exemplary view illustrating an example of a LIFT method using a uniformly heating laser beam of the present disclosure.

[FIG. 4E]FIG. 4E is an exemplary view illustrating another example of a LIFT method using a uniformly heating laser beam of the present disclosure.

[FIG. 4F]FIG. 4F is an exemplary view illustrating another example of a LIFT method using a uniformly heating laser beam of the present disclosure.

[FIG. 5A]FIG. 5A is an exemplary view illustrating an example of adjustment to a uniformly heating laser beam by a geometric method using an aspherical lens.

[FIG. 5B]FIG. 5B is an exemplary view illustrating an example of adjustment to a uniformly heating laser beam by a wave optical method using a DOE.

[FIG. 5C]FIG. 5C is an exemplary view illustrating an example of adjustment to a uniformly heating laser beam by combination of a reflective liquid crystal phase conversion element and a prism.

[FIG. 6]FIG. 6 is a graph plotting an example of risen temperatures in a thin film of a flying target material depending on difference in absorptivity of laser energy.

[FIG. 7A]FIG. 7A is an exemplary view illustrating an example of a laser beam magnification variation unit.

[FIG. 7B]FIG. 7B is an exemplary view illustrating another example of a laser beam magnification variation unit.

[FIG. 8]FIG. 8 is an exemplary view illustrating an example of a phase distribution converting unit.

[FIG. 9]FIG. 9 is a graph plotting an example of a relationship between a film thickness of a film formed only of gold and serving as an assisting film and transmittance (backside fluence $F_B$ (%)) of a laser beam.

[FIG. 10A]FIG. 10A is an exemplary diagram illustrating an example when an assisting film including light absorbing regions formed of a light absorbing material and a non-light absorbing region formed of a non-light absorbing material is disposed on a base material.

[FIG. 10B]FIG. 10B is an exemplary view illustrating an example when a base material on which the pattern of the light absorbing regions illustrated in FIG. 10A is formed is irradiated with a laser beam.

[FIG. 11A]FIG. 11A is an exemplary view illustrating an example of a flying body generating apparatus of the present disclosure.

[FIG. 11B]FIG. 11B is an exemplary view illustrating another example of a flying body generating apparatus of the present disclosure.

[FIG. 12]FIG. 12 is an exemplary view illustrating another example of a flying body generating apparatus of the present disclosure.

[FIG. 13]FIG. 13 is an exemplary view illustrating an example of an image forming apparatus of the present disclosure.

[FIG. 14]FIG. 14 is an exemplary view illustrating an example of a three-dimensional object producing apparatus of the present disclosure.

[FIG. 15A]FIG. 15A is an exemplary view illustrating an example of generation of a flying body when an assisting film is used.

[FIG. 15B]FIG. 15B is an exemplary view illustrating another example of generation of a flying body when an assisting film is used.

[FIG. 15C]FIG. 15C is an exemplary view illustrating another example of generation of a flying body when an assisting film is used.

[FIG. 15D]FIG. 15D is an exemplary view illustrating another example of generation of a flying body when an assisting film is used.

[FIG. 16A]FIG. 16A is an exemplary view illustrating an example of a shape of a laser beam, of which beam profile is confirmed, when an assisting film is used.

[FIG. 16B]FIG. 16B is an exemplary view illustrating an example of a remaining donor image of a flying target material on a base material after transfer, when an assisting film is used.

[FIG. 16C]FIG. 16C is an exemplary view illustrating an example of an image of a flying target material attached on an attaching target medium when the assisting film of FIG. 16B is used.

[FIG. 16D]FIG. 16D is an exemplary view illustrating another example of a remaining donor image of a flying target material on a base material after transfer, when an assisting film is used.

[FIG. 16E]FIG. 16E is an exemplary view illustrating an example of an image of a flying target material attached on an attaching target medium when the assisting film of FIG. 16D is used.

[FIG. 16F]FIG. 16F is an exemplary view illustrating another example of a remaining donor image of a flying target material on a base material after transfer, when an assisting film is used.

[FIG. 16G]FIG. 16G is an exemplary view illustrating an example of an image of a flying target material attached on an attaching target medium when the assisting film of FIG. 16F is used.

[FIG. 17A]FIG. 17A is an image illustrating an example of a remaining donor image on a base material after irradiated with a laser beam of Example.

[FIG. 17B]FIG. 17B is an image illustrating an example of an image, on an attaching target, of a flying target material transferred after irradiated with a laser beam of Example.

[FIG. 17C]FIG. 17C is an image illustrating an example of a remaining donor image on a base material after irradiated with a laser beam of Comparative Example.

[FIG. 17D]FIG. 17D is an image illustrating an example of an image, on an attaching target, of a flying target material transferred after irradiated with a laser beam of Comparative Example.

## Description of Embodiments

(Flying body generating method and flying body generating apparatus)

A flying body generating method of the present disclosure includes a flying target material flying step of irradiating a base material from a surface thereof opposite to a surface including a flying target material in at least a part of the surface, with a laser beam in a manner that a uniformly heated region having an approximately uniform temperature distribution higher than or equal to a melting point of the flying target material is generated at an interface between the base material and the flying target material, to fly the flying target material in an irradiating direction of the laser beam. The flying body generating method further includes other steps as needed.

The flying target generating apparatus of the present disclosure includes a flying target material flying unit configured to irradiate a base material from a surface thereof opposite to a surface including a flying target material in at least a part of the surface, with a laser beam in a manner that a uniformly heated region having an approximately uniform temperature distribution higher than or equal to a melting point of the flying target material is generated at an interface between the base material and the flying target material, to fly the flying target material in an irradiating direction of the laser beam. The flying body generating apparatus further includes other units as needed.

The flying body generating method of the present disclosure can be suitably performed using, for example, the flying body generating apparatus of the present disclosure. The flying target material flying step can be suitably performed by the flying target material flying unit. Hence, in the following description, the flying body generating method of the present disclosure will also be specified through description of the flying body generating apparatus of the present disclosure.

The present inventors have studied the following problems of the related art.
Existing image forming apparatuses employing, for example, inkjet methods have a problem that they have difficulty discharging inks stably when printing images using high-viscosity inks, because nozzles through which the inks are discharged are clogged with the inks. Moreover, in order to suppress clogging with inks, existing image forming apparatuses employing inkjet methods need size increase of the nozzle diameter of the nozzles through which inks are discharged, depending on, for example, the viscosity of the inks. However, an increased nozzle diameter makes the diameter of the ink droplets to be discharged relatively large, leading to a problem that the resolution may be degraded. Hence, existing image forming apparatuses employing inkjet methods have been unable to use high-viscosity inks because they have problems such as incapability of stable discharging of the inks and degradation of the resolution.

When flying a light-absorbable ink by the Laser-Induced Forward Transfer (LIFT) method described above, there is no need for discharging the ink through nozzles unlike when using inkjet methods. Therefore, it is possible to fly an ink even if the ink has a high viscosity. However, when flying an ink by the LIFT method for, for example, printing images, there may be a case where the ink scatters when flown, or a case where the ink scatters upon attaching on a print medium (target), leading to a problem that it may be difficult to control the attaching position of the ink.
This is because existing LIFT methods use a common Gaussian laser beam, of which highest energy is distributed at the optical axis of the laser beam, and the flying target ink scatters when irradiated with such a laser beam.
Moreover, existing LIFT methods using a Laguerre-Gaussian beam such as an optical vortex laser can improve the accuracy of the attaching position of the light absorbing material to be flown, compared with when a Gaussian beam is used, but may have difficulty controlling the attaching position more accurately.

When employing existing LIFT methods, it is known to be necessary to make the gap between a donor substrate and a receiver substrate small in order to prevent printing quality degradation in the LIFT system. The gap is preferably 500 micrometers or greater in order to increase the throughput in industrial applications. A gap that can be applied to bossed-recessed acceptors or shapes having a curved surface is preferably 1,000 micrometers or greater. It has been reported that satellites or spray may generally occur when the gap is 100 micrometers or greater (for example, see 'L. Rapp, J. Ailuno, A. P. Alloncle and P. Delaporte, "Pulsed-laser printing of silver nanoparticles ink: control of morphological properties," Opt. Express 19 (2011) 21563-74'). It has been reported that there is a need for adding a highly laser wavelength-absorbable film in order to improve the quality of a liquid droplet, (for example, see E. Turkoz, L. Deike and C. B. Arnold, "Comparison of jets from Newtonian and non-Newtonian fluids induced by blister-actuated laser-induced forward transfer (BA-LIFT)," Appl. Phys. A (2017) 123:652).

The flying body generating method of the present disclosure is based on a finding that the LIFT methods can attach a flying target material on a target while suppressing scattering of the flying target material to be flown, by irradiating the flying target material with a laser beam in a manner that a uniformly heated region having an approximately uniform temperature distribution higher than or equal to the melting point of the flying target material is generated at the interface between a base material and the flying target material.

Particularly, the flying body generating method of the present disclosure has been found remarkably excellent in attaching a flying target material on a target while suppressing scattering, even when the flying target material is a solid or a powder.

<Flying target material flying step and flying target material flying unit>

The flying target material flying step is a step of irradiating a base material from a surface thereof opposite to a surface including a flying target material in at least a part of the surface, with a laser beam in a manner that a uniformly heated region having an approximately uniform temperature distribution higher than or equal to a melting point of the flying target material is generated at an interface between the base material and the flying target material, to fly the flying target material in an irradiating direction of the laser beam.

The flying target material flying unit is a unit configured to irradiate a base material from a surface thereof opposite to a surface including a flying target material in at least a part of the surface, with a laser beam in a manner that a uniformly heated region having an approximately uniform temperature distribution higher than or equal to a melting point of the flying target material is generated at an interface between the base material and the flying target material, to fly the flying target material in an irradiating direction of the laser beam.

A "flying body" means a flying object generated when the flying target material is irradiated with a laser beam. "Flying" means the flying target material leaving a base material and flying toward a target (for example, a receiver base material or a transfer medium on which the flying target material attaches).

The shape of a flying body is different depending on the constituent material of the flying target material. For example, when the flying target material is a liquid, a preferable shape of the flying body is approximately spherical. When the flying target material is a solid, a preferable shape of the flying body is an arbitrary shape such as a flat shape and a particle shape. A liquid or a solid means the state of the flying target material in an environment (e.g., temperature and pressure) in which a flying body is generated.

When a LIFT method irradiates a flying target material with a laser beam and the flying target material reaches the melting point, the flying target material melts if the flying target material is a solid or a powder. The melted flying target material resolidifies in a cooling process, and at the same time as the resolidification, is released from the binding force (intermolecular force) at the interface with the surface of the base material, to fly in the form of a powder or small pieces. Another flying principle is as follows. When a LIFT method using a laser beam having a high irradiation energy raises the temperature of a flying target material to higher than or equal to the boiling point, the flying target material ablates and flies in the form of particles.

For example, a risen temperature at which a flying target material in a room temperature environment starts to vaporize is assumed to be Tb (K). In this case, when irradiating the flying target material with light (laser beam) in a manner that the formula (1) below is satisfied, it is possible to bring the flying target material to have a pressure higher than or equal to an outside pressure and vaporize the flying target material, and generate a vaporized region having a pressure higher than or equal to the outside pressure and fly the flying target material. Here, when an open system is assumed, the "outside pressure" means the atmospheric pressure.

$$Q \geqq = Tb(v \cdot c \cdot \rho) \qquad \qquad \text{---Formula (1)}$$

Here, v represents volume (kg), c represents specific heat (J/(kg $\cdot$ K)), and $\rho$ represents density (kg/m³).
Here, Q (J) is a heat input, not the amount of irradiation energy of light. Taking into consideration the light energy absorptivity or coefficient of absorption of the flying target material, it is possible to obtain the amount of irradiation energy (energy density) of light needed to generate a vaporized region having a pressure higher than or equal to an outside pressure.

The flying body generating method and the flying body generating apparatus of the present disclosure perform laser beam irradiation in a manner that a uniformly heated region having an approximately uniform temperature distribution higher than or equal to the melting point of the flying target material is generated at the interface between a base material and the flying target material.

Through laser beam irradiation in a manner that a region having a temperature higher than or equal to the melting point of the flying target material is generated at the interface between a base material and the flying target material, the binding force (intermolecular force) at the interface between the base material and the flying target material is reduced, to make the flying target material fly in the form of a powder or small pieces.

Here, "generation of a uniformly heated region having an approximately uniform temperature distribution higher than or equal to the melting point of the flying target material at the interface between a base material and the flying target material" in the present disclosure will be described in detail with reference to the drawings.

A "uniformly heated region" means a region in which the temperature distribution of the flying target material is approximately uniform.

A "region in which the temperature distribution of the flying target material is approximately uniform" means such a region of the flying target material disposed on a base material as having no unevenness in the temperature of the flying target material and having an approximately uniform temperature.

When the flying target material is a homogeneous material, what matters for generating "a region in which the temperature distribution of the flying target material is approximately uniform" is that the temperature (energy) distribution of a laser beam with which the flying target material is irradiated is approximately uniform. Approximate uniformity of the temperature (energy) distribution of a laser beam with which the flying target material is irradiated will be described with reference to the drawings. In the following description, a laser beam having an approximately uniform temperature (energy) distribution may be referred to as "uniformly heating laser beam".

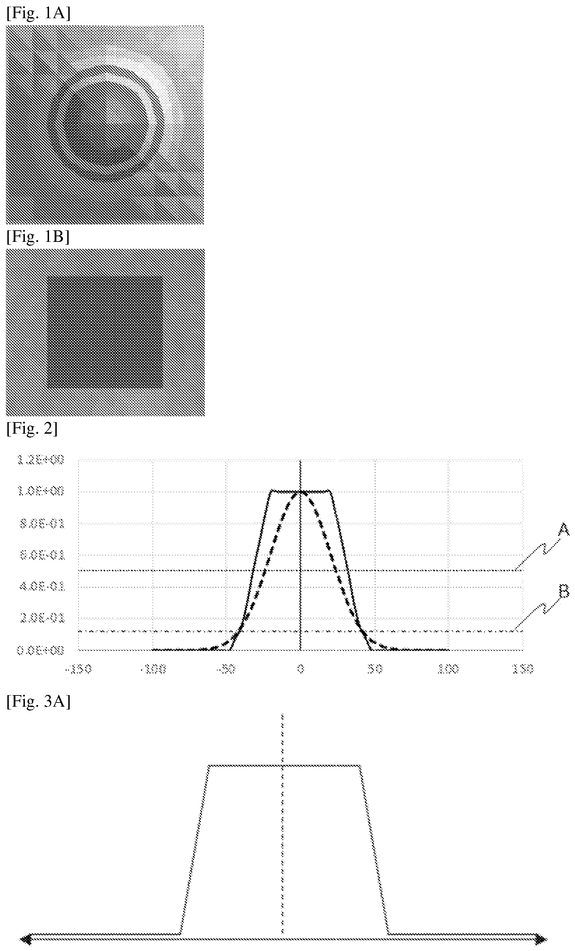

FIG. 1A is a diagram illustrating an example of a simulation image representing by contours, a temperature (energy) distribution of a Gaussian laser beam, which is a commonly widely used laser beam, in a cross-section of the laser beam orthogonal to the travelling direction of the laser beam. As illustrated in FIG. 1A, a Gaussian laser beam has a temperature (energy) distribution in which the energy intensity is the highest at the center (optical axis) of the laser beam and the energy intensity is lower at where closer to the rim in a cross-section of the laser beam orthogonal to the travelling direction of the laser beam. FIG. 2 is a graph plotting an example of energy intensity distributions of a Gaussian laser beam (dotted line) and a uniformly heating laser beam (solid line) in cross-sections of the laser beams orthogonal to the travelling direction of the laser beams. Like FIG. 1A, it can be seen from FIG. 2 that the Gaussian laser beam (dotted line) has the highest energy intensity at the center (optical axis) of the laser beam and a lower energy intensity at where closer to the rim.

The "energy intensity distribution of a laser beam in a cross-section of the laser beam orthogonal to the travelling direction of the laser beam" may be simply referred to as "cross-sectional intensity distribution of a laser beam".

FIG. 1B is a diagram illustrating an example of an image representing a temperature (energy) distribution of a uniformly heating laser beam. As illustrated in FIG .1B, a uniformly heating laser beam has a definite difference between a region having energy (the black region in the drawing) and a region having no energy (the gray region in the drawing). As can be seen from FIG. 2, the uniformly heating laser beam (solid line) does not simply has the highest energy at the optical axis like the Gaussian laser beam, but has an energy intensity distribution in which the energy intensity of the laser beam is approximately uniform. A laser beam having a cross-sectional intensity distribution in which the laser beam has an approximately uniform energy intensity may be referred to as a top hat laser beam.

It has been hitherto known to use a top hat laser beam for thin film laser patterning, but it has not been known to apply a top hat laser beam to a LIFT method (for example, see Japanese Unexamined Patent Application Publication No. 2012-143787).

It is ideal that a uniformly heating laser beam has a uniform laser beam energy intensity. That is, it is ideal that the laser beam energy is approximately uniform (approximately constant) in a cross-section of the laser beam orthogonal to the travelling direction of the laser beam.

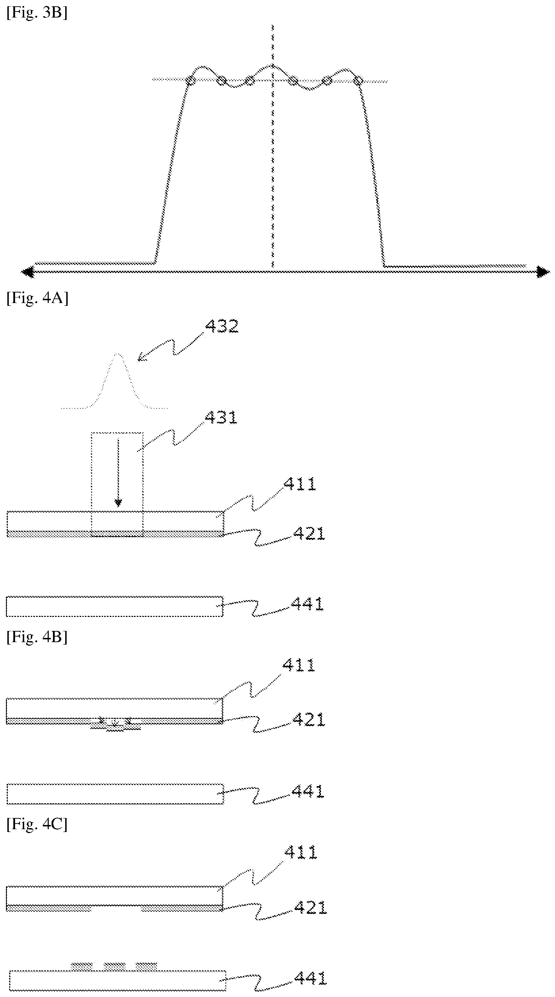

Here, FIG. 3A is an exemplary graph plotting an example of a cross-sectional intensity distribution of a uniformly heating laser beam. FIG. 3B is an exemplary graph plotting another example of a cross-sectional intensity distribution of a uniformly heating laser beam. As plotted in, for example, FIG. 3A, an ideal uniformly heating laser beam seems to have a uniform laser beam energy intensity in a cross-section orthogonal to the travelling direction of the laser beam. However, it does not actually occur that a laser beam has a completely constant energy intensity as plotted in FIG. 3A, but a laser beam has an energy distribution that seems to ripple with energy intensity value fluctuation as plotted in FIG. 3B. Hence, a uniformly heating laser beam has three or more points having an equal energy intensity in a cross-section orthogonal to the travelling direction of the laser beam. For example, in the cross-sectional intensity distribution of the uniformly heating laser beam plotted in FIG. 3B, there are six points at which the energy intensity of the laser beam is equal. As compared, in the cross-sectional intensity distribution of the ideal Gaussian laser beam plotted in FIG. 2, there are only at most two points at which the energy intensity of the laser beam is equal, because the energy intensity distribution of the ideal Gaussian laser beam is a Gaussian distribution.

Accordingly, a cross-sectional laser beam intensity distribution having three or more points at which the energy intensity of the laser beam is equal can be paraphrased as an approximately uniform laser beam energy distribution. In the present disclosure, a uniformly heating laser beam that generates a "uniformly heated region" means a laser beam having a cross-sectional laser beam intensity distribution having three or more points at which the energy intensity of the laser beam is equal.

It is possible to judge whether a laser beam is a uniformly heating laser beam, by measuring the energy distribution of a laser beam to be emitted with a beam profiler to see whether the cross-sectional intensity distribution of the laser beam has three or more points at which the energy intensity of the laser beam is equal.

Next, the advantages of performing a LIFT method using a uniformly heating laser beam will be described with reference to the drawings.

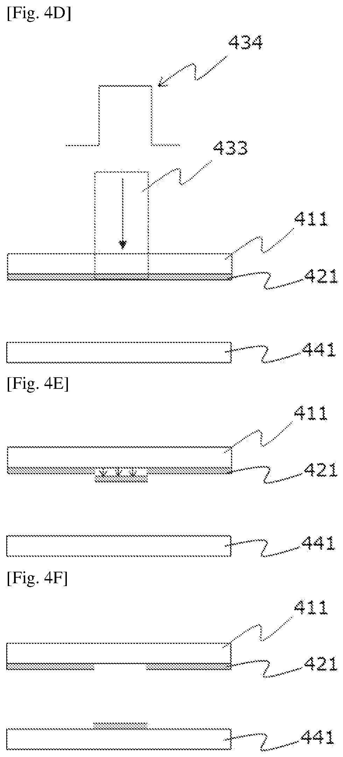

FIG. 4A to FIG. 4C are exemplary views illustrating an example of a LIFT method using an existing Gaussian laser beam. FIG. 4D to FIG. 4F are exemplary views illustrating an example of a LIFT method using the uniformly heating laser beam of the present disclosure. FIG. 4A to FIG. 4F describe a case where a transparent base material is used as a base material 411 and a solid film is used as a flying target material 421.

FIG. 4A is an exemplary view illustrating an example of a case where a base material 411 is irradiated with a Gaussian laser beam 431 from a surface thereof opposite to a surface including a flying target material 421 in at least a part of the surface.

As illustrated in FIG. 4A, when the base material 411 is irradiated with the Gaussian laser beam 431 from a surface thereof opposite to a surface including the flying target material 421, the flying target material 421 is irradiated with the Gaussian laser beam 431 through the base material 411. When the flying target material 421 is irradiated with the Gaussian laser beam 431, the flying target material 421 is heated to higher than or equal to the melting point by the energy of the laser beam, and this reduces the binding force (intermolecular force) at the interface between the base material 411 and the flying target material 421.

In the cross-sectional intensity distribution 432 of the Gaussian laser beam 431, the highest value occurs at the center of the Gaussian laser beam 431, and the intensity gradually lowers toward the rim. Hence, a force heading outward from the center of the Gaussian laser beam 431 tends to act on the flying target material 421 as illustrated in FIG. 4B. As a result, as illustrated in FIG. 4C, the flying target material 421 flown scatters and attaches on a target 441 at discrete positions.

FIG. 4D is an exemplary view illustrating an example of a case where a base material 411 is irradiated with a uniformly heating laser beam 433 from a surface thereof opposite to a surface including a flying target material 421 in at least a part of the surface.

This case of the uniformly heating laser beam is the same as the case of the Gaussian laser beam in that the flying target material 421 is irradiated with the laser beam through the base material 411, the flying target material 421 is heated to higher than or equal to the melting point by the energy of the laser beam, and the binding force at the interface between the base material 411 and the flying target material 421 is reduced. However, in the present disclosure, the flying target material 421 is irradiated with the laser beam in a manner that a uniformly heated region is generated in the flying target material 421. That is, as described above, the flying target material 421 is irradiated with the uniformly heating laser beam 433 having an approximately uniform cross-sectional intensity distribution 434. Therefore, a force acts on the flying target material 421 in the same direction as the irradiating direction of the uniformly heating laser beam 433, as illustrated in FIG. 4E. As a result, the flying target material 421 flies in the same direction as the irradiating direction of the laser beam and can attach on a target 441 while being suppressed from scattering, as illustrated in FIG. 4F.

"Full Width at Half Maximum (FWHM)" and "$1/e^2$ width" are indicators of the size (width) of a laser beam.

"Full Width at Half Maximum (FWHM)" means a spectral width of a laser beam at half the maximum intensity of the laser beam (for example, the spectral width at the intensity A in FIG. 2).

"$1/e^2$ width" means an indicator that regards the distance between two points at an intensity corresponding to 13.5% of the maximum intensity in a cross-sectional intensity distribution of a laser beam, as the laser beam diameter (for example, the spectral width at the intensity B in FIG. 2).

The ratio between "Full Width at Half Maximum (FWHM)" and "$1/e^2$ width" is assumed as ho (FWHM/($1/e^2$ width)). In this case, the ratio ho of an ideal Gaussian laser beam is "0.6", and the ratio ho of an ideal top hat beam is "1".

The area to be irradiated with a portion of a Gaussian laser beam is smaller as the energy intensity of the portion of the laser beam is higher. Moreover, the laser beam intensity of a Gaussian laser beam is higher at a portion closer to the center of the laser beam. That is, the energy intensity of a Gaussian laser beam is uneven in a region irradiated with the Gaussian laser beam.

On the other hand, the ratio ho (FWHM/($1/e^2$ width)) between "Full Width at Half Maximum (FWHM)" and "$1/e^2$ width" of the uniformly heating laser beam or a top hat beam having the maximum intensity is theoretically "1", and the energy intensity of the uniformly heating laser beam is uniform in a region ("$1/e^2$ width") irradiated with the uniformly heating laser beam. The present inventors have found it preferable to irradiate the flying target material with a laser beam in a manner that the ratio ho (FWHM/(1/e$^2$ width)) between Full Width at Half Maximum (FWHM) and 1/e$^2$ width of an energy intensity distribution of the laser beam in a cross-section of the laser beam orthogonal to the travelling direction of the laser beam satisfies 0.6<ho<1, more preferably 0.7≦ho≦0.9. Note that the ratio ho (FWHM/(1/e$^2$ width)) of the uniformly heating laser beam illustrated in FIG. 1B is 0.85.

The shape of the energy intensity distribution of the uniformly heating laser beam in a cross-section of the laser beam orthogonal to the travelling direction of the laser beam, where the 1/e$^2$ width is regarded as the base, is not particularly limited and may be appropriately selected depending on the intended purpose. Examples of the shape include a square, a rectangle, a parallelogram, a circle, and an ellipse.

Next, the flying target material flying unit will be described.

As the flying target material flying unit, for example, one that includes a laser light source and a laser beam transforming unit can be used. The flying target material flying unit further includes a laser beam shaping unit and other units as needed.

-Laser light source-

The laser light source is not particularly limited and may be appropriately selected depending on the intended purpose so long as the laser light source can emit laser light. Examples of the laser light source include a solid-state laser, a gas laser, and a semiconductor laser that generate laser beams. A laser light source that can oscillate pulses is preferable. Examples of the solid-state laser include a YAG laser and a titanium sapphire laser.

Examples of the gas laser include an argon laser, a helium neon laser, and a carbon dioxide laser.

The wavelength of the laser beam is not particularly limited, may be appropriately selected depending on the intended purpose, and is preferably 300 nm or longer but 11 micrometers or shorter and more preferably 350 nm or longer but 1,100 nm or shorter.

The pulse width of the laser beam is not particularly limited, may be appropriately selected depending on the intended purpose, and is preferably 2 nanoseconds or greater but 100 nanoseconds or less and more preferably 2 nanoseconds or greater but 10 nanoseconds or less. Nanosecond laser beams can also cause materials to ablate, but laser beams having a high peak power, such as picosecond laser beams and femtosecond laser beams can more easily cause materials to ablate and are preferable.

The pulse frequency of the laser beam is not particularly limited, may be appropriately selected depending on the intended purpose, and is preferably 10 Hz or higher but 1 MHz or lower and more preferably 20 Hz or higher but 50 kHz or lower.

Examples of the laser light source include a Nd:YAG laser having a wavelength of 1,064 nm.

--Laser beam--

The laser beam is intended for generating a uniformly heated region having a temperature higher than or equal to the melting point of the flying target material and having an approximately uniform heat distribution. In other words, the laser beam is not particularly limited and may be appropriately selected depending on the intended purpose so long as the laser beam has an approximately uniform temperature (energy) distribution. Examples of the laser beam intended for generating a uniformly heated region having a temperature higher than or equal to the melting point of the flying target material and having an approximately uniform heat distribution include a uniformly heating laser beam.

-Laser beam transforming unit-

The laser beam transforming unit can generate a desired laser beam as the laser beam.

The laser beam transforming unit is not particularly limited and may be appropriately selected depending on the intended purpose. Examples of the laser beam transforming unit include a uniformly heating laser beam transforming unit.

The uniformly heating laser beam transforming unit is not particularly limited so long as the uniformly heated region described above can be generated. Examples of the uniformly heating laser beam transforming unit include an aspherical lens, a phase mask such as a diffractive optical element (DOE), and a phase converting unit such as a liquid crystal phase conversion element (SLM). One of these elements may be used alone or two or more of these elements may be used in combination.

The method of using an aspherical lens is a method of geometrically transforming a Gaussian laser beam into a uniformly heating laser beam.

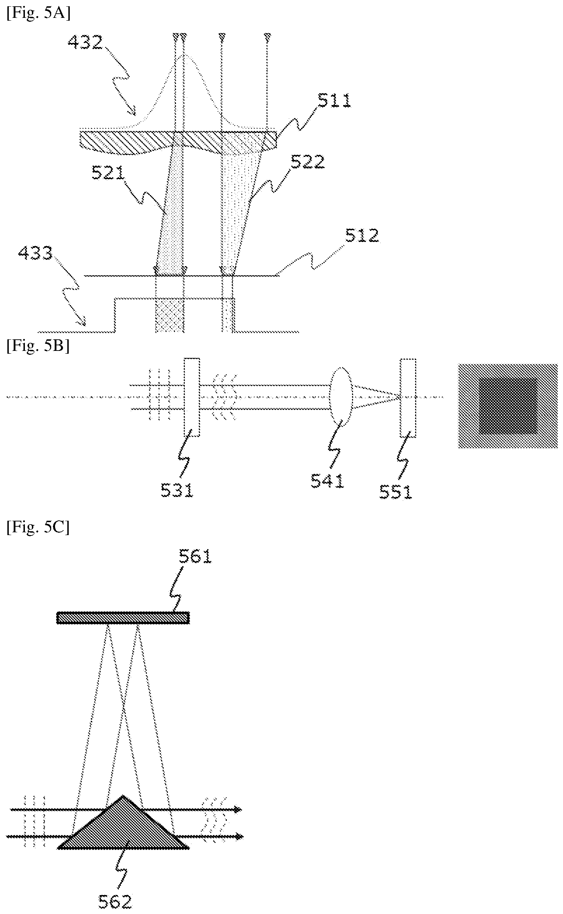

FIG. 5A is an exemplary view illustrating an example of adjustment to a uniformly heating laser beam by a geometric method using an aspherical lens. As illustrated in FIG. 5A, through passing of a Gaussian laser beam through an aspherical lens 511 for expanding a central portion 521 of the laser beam by a concave lens effect and converging peripheral portions 522 of the laser beam by a convex lens effect, the laser beam having a cross-sectional intensity distribution 432 of a Gaussian laser beam can be adjusted to a laser beam having a cross-sectional intensity distribution 433 of a uniformly heating laser beam on an irradiated surface (base material) 512.

The method of using a phase mask such as a diffractive optical element (DOE) is a method of transforming a Gaussian laser beam into a uniformly heating laser beam in a wave optical manner.

FIG. 5B is an exemplary view illustrating an example of adjustment to a uniformly heating laser beam by a wave optical method using a DOE. As illustrated in FIG. 5B, through passing of a Gaussian laser beam through a DOE 531, the wavefront is controlled in a manner that a phase distribution serving as a concave lens effect is applied to the central portion of the laser beam and a phase distribution serving as a convex lens effect is applied to the peripheral portions of the laser beam, to enable adjustment to a uniformly heating laser beam. FIG. 5B also illustrates a condenser lens 541 and a base material 551.

The method of using a phase conversion unit such as a liquid crystal phase conversion element (SLM) can convert the phase distribution of a laser beam (or can temporally modulate the phase distribution of a laser beam to spatial light). Hence, the phase conversion unit may temporally change a wavefront on which a wavefront is superimposed.

As any other example than those described above, combination of a reflective liquid crystal phase conversion element and a prism may be used.

FIG. 5C is an exemplary view illustrating an example of adjustment to a uniformly heating laser beam by combination of a reflective liquid crystal phase conversion element 561 and a prism 562.

A laser beam transforming optical system and an fθ lens transform incident light into a uniformly heating laser beam and irradiate the flying target material with the uniformly heating laser beam. The size (diameter, $1/e^2$ width) of the laser beam with which a base material is irradiated is preferably 20 micrometers or greater but 200 micrometers or less and more preferably 30 micrometers or greater but 150 micrometers or less.

The laser beam size of 20 micrometers or greater but 200 micrometers or less enables maintenance of laser scanning quality, and enables two-dimensional drawing or three-dimensional printing at a high resolution.

As the energy of a uniformly heating laser beam expressed by the fluence of the laser beam, it is preferable that the fluence $F_B$ ($J/cm^2$) of the laser beam on a surface on which the flying target material is disposed be higher than or equal to 20%, more preferably higher than or equal to 20% but lower than or equal to 80% of the fluence $F_F$ ($J/cm^2$) of the laser beam on a surface of the base material irradiated with the laser beam.

Fluence ($J/cm^2$) typically refers to fluence at the incident side (frontside fluence, $F_F$). In addition, fluence is often discussed in terms of the coefficient of absorption of the material. However, the present inventors' studies have revealed that what matters to the flying quality is the control of fluence (backside fluence, $F_B$) on a film surface of a film of the flying target material opposite to a film surface irradiated with light.

This will be described in detail.

When the laser intensity before incidence into the flying target material is $I_0$, the light intensity I after incidence is expressed by Formula (3) below using a coefficient of absorption $\alpha$, based on the Lambert-Beer Law.

$$I = I_0 \exp(-\alpha t) \qquad \text{---Formula (3)}$$

where $\alpha$ represents a coefficient of absorption, t represents a film thickness, and $I/I_0$ represents an absorptivity at a film thickness t.

This suggests that the heat input Q varies in the depth direction, and risen temperatures vary in the depth direction. Hence, when the coefficient of absorption and the film thickness are known, it is possible to calculate the fluence at the back side (backside fluence).

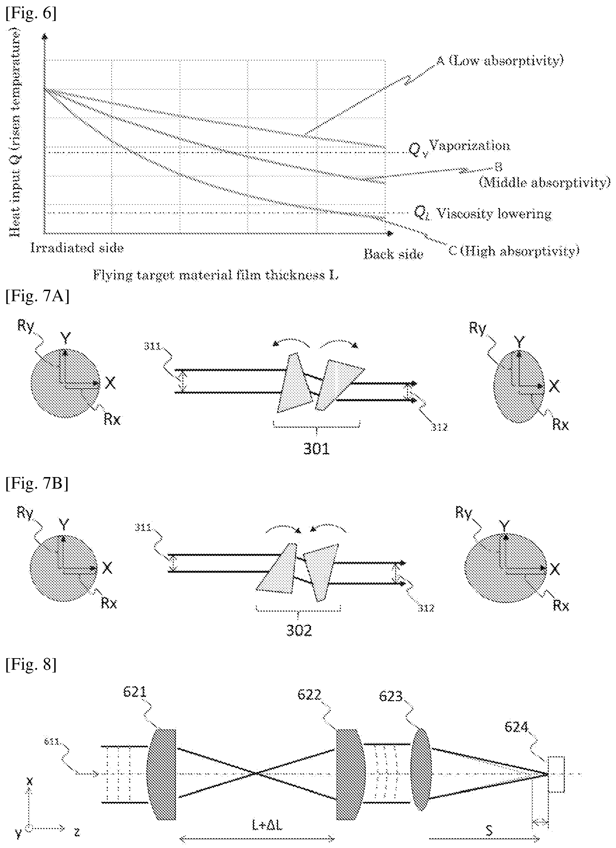

FIG. 6 is a graph plotting an example of risen temperatures in a thin film of the flying target material depending on difference in laser energy absorptivity. $Q_L$ represents energy needed to lower the viscosity, and $Q_V$ represents energy needed for vaporization.

The flying target material undergoes viscosity lowering or vaporization depending on the risen temperature.

The material C having a high laser energy absorptivity in FIG. 6 has almost no heat input to the back side (i.e., a surface on which the flying target material is disposed) and has no temperature rise at the back side. Therefore, the frontside fluence $F_F$ ($J/cm^2$) and the backside fluence $F_B$ ($J/cm^2$) become mismatched and a good quality cannot be obtained. Accordingly, it is preferable that the fluence $F_B$ ($J/cm^2$) of the laser beam on a surface on which the flying target material is disposed be higher than or equal to 20% of the fluence $F_F$ ($J/cm^2$) of the laser beam on a surface of the base material irradiated with the laser beam.

The material A having a low laser energy absorptivity in FIG. 6 has a high heat input to the back side, and the frontside fluence $F_F$ ($J/cm^2$) and the backside fluence $F_B$ ($J/cm^2$) do not become mismatched. However, because the backside fluence $F_B$ ($J/cm^2$) is extremely high, the utilization efficiency of the laser beam may be low, or the attaching target may be damaged by the laser in some case.

The laser energy absorptivity B in FIG. 6 has been found a suitable condition because at the laser energy absorptivity B, the frontside fluence $F_F$ ($J/cm^2$) reaches the vaporization temperature and the backside fluence $F_B$ ($J/cm^2$) reaches the viscosity lowering temperature.

-Laser beam shaping unit-

Examples of the laser beam shaping unit include a laser beam magnification variation unit and a phase distribution converting unit.
The laser beam shaping unit is disposed, for example, at the light source side of a condenser lens, and an incident laser beam can form a desired cross-sectional shape and a desired transmitted wavefront on the front surface of the condenser lens.

--Laser beam magnification variation unit--

The laser beam magnification variation unit is a unit configured to change the ratio between one beam diameter of an incident laser beam and another beam diameter of the incident laser beam orthogonal to the one beam diameter in a cross-section of the incident laser beam orthogonal to the optical axis of the incident laser beam.
Examples of the laser beam magnification variation unit include a prism.
FIG. 7A and FIG. 7B are exemplary views illustrating examples of the laser beam magnification variation unit. The laser beam magnification variation unit illustrated in FIG. 7A includes a pair of transparent prisms (double prisms 301) such as glass, and is configured to change the direction of light utilizing light refraction to change the magnification of the light only in one direction. Magnification variation means magnification change in a manner to change the aspect ratio of a laser beam cross-section. In FIG. 7A, the left circle represents the cross-sectional shape of an incident laser beam. For facilitation of understanding, the incident laser beam is assumed to be circular. When the radius of the cross-sectional shape of the incident laser beam in the x direction is Rx and the radius of the cross-sectional shape of the incident laser beam in the y direction is Ry, Rx/Ry=1 is satisfied (in FIG. 7A, the incident laser beam has a diameter $D_{in}$ 311 and the outgoing laser beam has a diameter $D_{in}$ 312).
FIG. 7A illustrates an example in which the incident-side prism is rotated counterclockwise from a position at which two sides of the incident-side prism forming a right angle extend in the x direction and the y direction respectively, and the outgoing-side prism is rotated clockwise from a position at which two sides of the outgoing-side prism forming a right angle extend in the x direction and the y direction respectively. In this case, the outgoing laser beam becomes relatively smaller than the incident laser beam in the x direction. That is, magnification reduction to Rx/Ry<1 is available.
FIG. 7B illustrates an example in which the incident-side prism is rotated clockwise from a position at which two sides of the incident-side prism forming a right angle extend in the x direction and the y direction respectively, and the outgoing-side prism is rotated counterclockwise from a position at which two sides of the outgoing-side prism forming a right angle extend in the x direction and the y direction respectively (double prisms 302). In this case, the outgoing laser beam becomes relatively larger than the incident laser beam in the x direction. That is, magnification expansion to Rx/Ry>1 is available.
As obvious from the above, it is possible to freely change the ratio Rx/Ry of one beam diameter of an incident laser beam to another beam diameter of the incident laser beam orthogonal to the one beam diameter in a cross-section of the incident laser beam orthogonal to the optical axis of the incident laser beam.

--Phase distribution (wavefront) converting unit--

The phase distribution converting unit is a unit configured to convert the phase distribution of an incident laser beam wavefront.
Examples of the phase distribution converting unit include a convex cylinder lens.
FIG. 8 is an exemplary view illustrating an example of the phase distribution converting unit. The phase distribution converting unit illustrated in FIG. 8 is an optical system configured to correct a transmitted wavefront of a laser beam 611 using two convex cylinder lens optical systems. When two cylinder lenses (CYL1 621 and CYL2 622) are disposed counter to each other in a manner that the focal points of the two cylinder lenses coincide with each other (in a manner that the distance between the cylinder lenses becomes L), a wavefront remains flat at a magnification of ×1 and is condensed at the same position in the x direction and in the y direction. When the distance between the cylinder lenses is slightly changed (in a manner that the distance between the cylinder lenses becomes L+ΔL), it is possible to form a cylinder wavefront independent in the x direction. When these optical systems are combined with the defocusing effect of the condenser lens (axisymmetry) 623, it is possible to generate a 0-degree astigma component of a transmitted wavefront. FIG. 8 also illustrates a base material 624.
More specifically, the laser beam shaping unit may have the following configuration.

- First lens (CYL1): a flat convex cylinder lens having a focal length of 50 mm, glass material: synthetic quartz
- Second lens (CYL2): a flat convex cylinder lens having a focal length of 50 mm, glass material: synthetic quartz
- Third lens: a condenser lens (axisymmetric lens) having a focal length of 100 mm, glass material: synthetic quartz

The focal length S is the distance between a first surface of a condenser lens and a light condensed point. There is a relationship that the focal point becomes farther by 0.5 mm when the gap L between CYLs is reduced by 100 micrometers. This makes it possible to set the focal points in the x and y directions independently. In the specific example described above, two convex cylinder lenses are used for one cylinder. However, a lens obtained by pasting, for example, achromat lenses together may be used.

Moreover, a lens having an aspherical shape can realize a greater aberration correction.

Any other basic properties are the same as concavo-convex CYL optical systems. Although having a longer optical path than concavo-convex CYL optical systems, the present system can generate a very good wavefront.

Using a plurality of cylinder lenses and a liquid crystal phase conversion element, it is possible to convert the phase distribution of an incident laser beam wavefront to an ideal condition.

The cylinder lens method has limitations on the phase distribution conversion patterns, but can correct astigmatism, which cannot be overcome by alignment of optical components, favorably with a high quality.

In the way described above, it is possible to improve the flying accuracy.

-Other units-

The other units are not particularly limited and may be appropriately selected depending on the intended purpose. Examples of the other units include a laser beam wavelength changing element and an output power adjusting unit.

--Laser beam wavelength changing element--

The laser beam wavelength changing element is not particularly limited and may be appropriately selected depending on the intended purpose so long as the laser beam wavelength changing element can change the wavelength of a laser beam to a wavelength that can be absorbed by the flying target material and can be transmitted through a base material described below. Examples of the laser beam wavelength changing element include a KTP crystal, a BBO crystal, an LBO crystal, and a CLBO crystal.

--Output power adjusting unit--

The output power adjusting unit is not particularly limited and may be appropriately selected depending on the intended purpose so long as the output power adjusting unit can adjust a laser beam to an appropriate output power. Examples of the output power adjusting unit include glass.

The output power of a laser beam with which the flying target material is irradiated is not particularly limited and may be appropriately selected depending on the intended purpose so long as the uniformly heated region of the present disclosure can be generated. In the following description, "output power" may be referred to as "irradiation energy".

It is preferable to appropriately adjust the irradiation energy of a laser beam because the appropriate value of the irradiation energy is different depending on the viscosity and film thickness of the flying target material. Specifically, the irradiation energy of a laser beam is preferably 100 microjoules/dot or lower and more preferably 60 microjoules/dot or lower.

-Base material-

For example, the shape, structure, size, and material of the base material are not particularly limited and may be appropriately selected depending on the intended purpose. The shape of the base material is not particularly limited and may be appropriately selected depending on the intended purpose so long as the base material can bear the flying target material on a surface and can be irradiated with a laser beam at the back surface (i.e., a surface of the base material opposite to a surface including the flying target material in at least a part of the surface).

Examples of the shape of the base material include a flat plate shape, a true-circular or elliptic tubular shape, a surface partially cut out from a tubular shape, and an endless belt type shape. It is preferable that the base material have a tubular shape and a flying target material feeding unit feed the flying target material to the surface of the base material that is rotating in the circumferential direction. Bearing the flying target material on the surface of the base material having a tubular shape allows feeding the flying target material irrespective of a dimension of the attaching target in the outer circumferential direction of the tubular shape. In this case, by providing the flying target material flying unit inside the tubular shape in a manner that a laser beam can be emitted from inside the tubular shape to the outer circumference of the tubular shape, and by rotating the base material in the circumferential direction, it is possible to realize continuous irradiation. Examples of the flat plate shape of the base material include a slide glass.

The structure of the base material is not particularly limited and may be appropriately selected depending on the intended purpose.

The size of the base material is not particularly limited and may be appropriately selected depending on the intended purpose. It is preferable that the base material have a dimension matching the width of the attaching target.

The constituent material of the base material is not particularly limited and may be appropriately selected depending on the intended purpose so long as light can be transmitted through the base material. Among materials through which light can be transmitted, inorganic materials such as various kinds of glass containing silicon oxide as a main component, and organic materials such as transparent heat-resistant plastics and elastomers are preferable in terms of transmittance and heat resistance. A base material may be referred to as a transparent body.

The surface roughness Ra of the base material is not particularly limited and may be appropriately selected depending on the intended purpose. The surface roughness Ra of the base material is preferably 1 micrometer or less on both of the external and internal surfaces in terms of suppressing refractive scatter of a laser beam and preventing reduction of energy to be applied to the flying target material. When the surface roughness Ra of the base material is within a preferable range, it is possible to suppress variation of the average thickness of the flying target material attached on the attaching target, and attach the flying target material in a desired amount.

The surface roughness Ra can be measured according to JIS B0601. For example, the surface roughness Ra can be measured with a confocal laser microscope (available from Keyence Corporation) and a contact-type surface profile measuring instrument (DEKTAK (registered trademark) 150, available from Bruker AXS K.K.).

-Flying target material-

The flying target material is a material arbitrarily selected by a user, and can be appropriately selected depending on the intended purpose. Examples of the flying target material include a light absorbing material and a non-light absorbing material.

--Light absorbing material--

The light absorbing material contains a light absorbing substance and contains other substances that are appropriately selected as needed.

The absorbance of the light absorbing material to the wavelength of light (laser beam) is preferably higher than 1 and more preferably higher than 2. It is preferable that the absorbance of the light absorbing material to the wavelength of a laser beam be higher than 2, because energy efficiency can be enhanced.

--Light absorbing substance--

The light absorbing substance is not particularly limited and may be appropriately selected depending on the intended purpose so long as the light absorbing substance absorbs light having a predetermined wavelength. Examples of the light absorbing substance include colorants such as pigments and dyes.

The light transmittance (absorbance) of a coating film formed of the light absorbing material having a light absorbing property is preferably 10% or lower (1 or higher), more preferably 1% or lower (2 or higher), yet more preferably 0.1% or lower (3 or higher), and particularly preferably 0.01% or lower (4 or higher). When the transmittance is within the preferable range, there is an advantage that the light absorbing material is not likely to undergo changes such as drying and melting, because the energy of a laser beam absorbed into the base material is not likely to be converted to heat. Furthermore, when the transmittance is within the preferable range, there is an advantage that energy applied to the light absorbing material is less likely to lower, so the light absorbing material is not likely to be attached on a wrong position. The transmittance (absorbance) can be measured with, for example, a spectrophotometer (available from Shimadzu Corporation, UV3600).

For example, the form, size, and constituent material of the light absorbing material are not particularly limited and may be appropriately selected depending on the intended purpose.

Examples of the form of the light absorbing material include a liquid, a solid, and a powder. Particularly, success in flying a high-viscosity material or a solid is an advantage that cannot be achieved by existing inkjet recording methods.

When the light absorbing material has a form of a solid or a powder, it is preferable to bring the light absorbing material into a state having a viscous property when irradiating the light absorbing material with a laser beam. Specifically, when flying a solid or a powder, for example, it is preferable to heat the light absorbing material to a melted state having a viscous property, before irradiating the light absorbing material with a laser beam.

The light absorbing material that is a liquid is not particularly limited and may be appropriately selected depending on the intended purpose. Examples of the light absorbing material that is a liquid include an ink containing a pigment and a solvent, and a conductive paste containing a conductor and a solvent. When an ink containing a solvent is irradiated with a laser beam, and if the solvent is not light-absorbable, energy of the laser beam is applied to a light-absorbing substance contained in the ink but not to the solvent, and the solvent flies together with the light-absorbing substance.

The viscosity of the light absorbing material that is a liquid is not particularly limited, may be appropriately selected depending on the intended purpose, and is preferably 50,000 mPa · s or lower, and more preferably 5,000 mPa · s or lower. When the viscosity of the light absorbing material is extremely high, surface tension effects are not obtained easily. Considering these factors, a UV-curable ink is preferable.

The viscosity can be measured with, for example, a rotary viscometer (available from Toki Sangyo Co., Ltd., VISCOMATE (registered trademark) VM-150III) or a rheometer (HAAKE RHEOSTRESS 600, available from Thermo Fisher Scientific K.K.) in an environment at 25 degrees C.

It is preferable that the light absorbing material be a material of which viscosity lowers when irradiated with a laser beam.

The conductive paste is not particularly limited and may be appropriately selected depending on the intended purpose so long as the conductive paste is an ink containing a conductor. Examples of the conductive paste include a conductive paste known or commonly used in the method for fabricating circuit boards.

The conductor is not particularly limited and may be appropriately selected depending on the intended purpose. Examples of the conductor include conductive inorganic particles such as silver, gold, copper, nickel, ITO, carbon, and carbon nanotube, and particles formed of conductive organic polymers such as polyaniline, polythiophene (e.g., poly(ethylenedioxythiophene)), polyacetylene, and polypyrrole. One of these conductors may be used alone or two or more of these conductors may be used in combination.

The volume resistivity of the conductive paste is not particularly limited, may be appropriately selected depending on the intended purpose, and is preferably $10^3 \Omega \cdot cm$ or lower because the conductive paste can be used for typical applications as electrodes.

The light absorbing material that is a powder is not particularly limited and may be appropriately selected depending on the intended purpose. Examples of the light absorbing material that is a powder include metal particles, metal oxide particles, and resin particles.

Examples of the metal particles include silver, gold, aluminum, platinum, and copper.

Examples of the metal oxide particles include alumina, titanium oxide, zinc oxide, tin oxide, and silica.

Examples of the resin particles include silicone resins, acrylic resins, melamine resins, nylon resins, urethane resins, polyimide resins, fluorine resins, polyester resins, and styrene-acrylic resins.

The light absorbing material that is a powder may be mixed with, for example, a filler such as a pigment, and additives as needed.

The volume average particle diameter (size) of the powder is not particularly limited, may be appropriately selected depending on the intended purpose, and is preferably 0.001 micrometers or greater but 100 micrometers or less and more preferably 0.01 micrometers or greater but 10 micrometers or less.

Examples of the method for disposing the light absorbing material that is a powder on a surface of a base material include a powder coating method of coating a base material with the particles in the powder form, and a method of dispersing the particles in a solvent and spray-coating a base material with the resultant.

After coating, the particles may be compacted by application of pressure or by decompression and deaeration as needed. A compact of a powder is preferably a layer state having a predetermined average thickness, and the layer-state solid may be borne on the surface of the base material.

The light absorbing material that is a solid is not particularly limited and may be appropriately selected depending on the intended purpose. Examples of the light absorbing material that is a solid include inorganic substance films and organic substance films formed by sputtering and vapor deposition, resin films formed by applying and drying solutions of resins dissolved in solvents, and resin layers formed by applying and cooling thermoplastic resins that have been brought into a liquid state by heating and melting.

Examples of the inorganic substance films used for sputtering and vapor deposition include metal thin films of, for example, silver, gold, aluminum, platinum, and copper.

When a solid film to be flown is a metal, of which melting point and boiling point are known, such as gold (Au) (with a melting point of 1,064 degrees C and a boiling point of 2,700 degrees C), aluminum (Al) (with a melting point of 660.32 degrees C and a boiling point of 2,519 degrees C), titanium (Ti) (with a melting point of 1,812 degrees C and a boiling point of 3,285 degrees C (also reported to be 3,287 degrees C), and silver (Ag) (with a melting point of 961.78 degrees C and a boiling point of 2,162 degrees C), it is possible to raise the temperature of the solid film of such a metal to a temperature higher than or equal to the melting point or the boiling point by irradiating the solid film with energy of a matching level.

Examples of the organic substance films include organic compounds having a molecular weight of 1,000 or less.

As the resin films, common resins such as thermosetting resins, photocurable resins, electron beam-curable resins, and thermoplastic resins can be used. Fillers such as pigments may be mixed with these resins as needed.

The metal thin film is not particularly limited and may be appropriately selected depending on the intended purpose. Examples of metals include common metals such as silver, gold, aluminum, platinum, and copper that can be vapor-deposited or sputtered. One of these metals may be used alone or two or more of these metals may be used in combination.

Examples of the method for flying the metal thin film and forming an image pattern include a method of previously forming a metal thin film on a base material such as glass and a film and irradiating the metal thin film with a laser beam to fly the metal thin film and form an image pattern. Other examples of the method include a method of flying a non-image portion to form an image pattern.

A compact of a powder is preferably a film (layer) state having a predetermined average thickness, and the film (layer)-state solid may be borne on the surface of the base material.

--Non-light absorbing material--

The non-light absorbing material is not particularly limited and may be appropriately selected depending on the intended purpose so long as the non-light absorbing material is a material that does not absorb light. Examples of the non-light absorbing material include solids, powders, or liquid resins, and light-resistant materials.

When using a non-light absorbing material as the flying target material, an assisting film configured to assist in flying the non-light absorbing material by absorbing light and undergoing, for example, ablation like the flying target material is used between the base material and the flying target material.

Examples of the constituent material of the light-resistant materials include ceramics.

The size of the flying target material is not particularly limited and may be appropriately selected depending on the intended purpose.

The average thickness (film thickness) of a film formed of the flying target material it not particularly limited, may be appropriately selected depending on the intended purpose, and is preferably 3 micrometers or greater, more preferably 5 micrometers or greater, and yet more preferably 5 micrometers or greater but 35 micrometers or less. When the average thickness of the flying target material is in the preferable range described above, it is possible to suppress scattering of the flying target material when the flying target material is irradiated with a laser beam.

The method for measuring the average thickness of the flying target material is not particularly limited and may be appropriately selected depending on the intended purpose. Examples of the method include a method of selecting a plurality of arbitrary points of the flying target material and calculating the average of the thicknesses of the plurality of points. The average thickness is preferably an average of thicknesses of five points, more preferably an average of thicknesses of ten points, and particularly preferably an average of thicknesses of twenty points.

The instrument for measuring the average thickness of the flying target material is not particularly limited and may be appropriately selected depending on the intended purpose. Examples of the instrument include contactless or contact-type instruments such as a laser displacement sensor and a micrometer.

The specific constituent material of the flying target material is not particularly limited and may be appropriately selected depending on the intended purpose. For example, the constituent material may be a colorant such as a toner for image formation, or may be a three-dimensional object forming agent described below for production of a three-dimensional object.

-Colorant-

For example, the shape and constituent material of the colorant are not particularly limited and may be appropriately selected depending on the intended purpose like the light absorbing material. Differences between the flying target material and the flying target material when it is a colorant will be described below.

The colorant that is a liquid is not particularly limited and may be appropriately selected depending on the intended purpose. For example, a water-based ink obtained by dispersing a colorant such as a dye, a pigment, colorant particles, and colorant oil droplets in water serving as a solvent may be used. Not only a water-based ink, but also a colorant containing as a solvent, a liquid having a relatively low boiling point such as hydrocarbon-based organic solvents and various alcohols may be used. Among these colorants, a water-based ink is preferable in terms of safety of a volatile component and a risk of explosion.

An image forming apparatus using the flying body generating apparatus of the present disclosure can form images using, for example, process inks for offset printing using a plate, inks compliant with JAPAN COLOR, and spot color inks. Therefore, the image forming apparatus using the flying body generating apparatus of the present disclosure can easily reproduce without a plate, digital images matching the colors used in offset printing.

Moreover, the image forming apparatus using the flying body generating apparatus of the present disclosure can form images using UV-curable inks. Therefore, the image forming apparatus using the flying body generating apparatus of the present disclosure can prevent blocking in which overlaid recording media stick to each other, and can simplify a drying step by curing the UV-curable inks by irradiation with ultraviolet rays in a fixing step.

Examples of the constituent material of the colorant include organic pigments, inorganic pigments, and dyes. One of these materials may be used alone or two or more of these materials may be used in combination.

Examples of the organic pigments include dioxazine violet, quinacridone violet, copper phthalocyanine blue, phthalocyanine green, sap green, monoazo yellow, disazo yellow, polyazo yellow, benzimidazolone yellow, isoindolinone yellow, fast yellow, cromophtal yellow, nickel azo yellow, azomethine yellow, benzimidazolone orange, alizarin red, quinacridone red, naphthol red, monoazo red, polyazo red, perylene red, anthraquinonyl red, diketo-pyrrolo-pyrrole red, diketo-pyrrolo-pyrrole orange, benzimidazolone brown, sepia, and aniline black. Examples of metal lake pigments among organic pigments include rhodamine lake, quinoline yellow lake, and brilliant blue lake.

Examples of inorganic pigments include cobalt blue, cerulean blue, cobalt violet, cobalt green, zinc white, titanium white, titanium yellow, chromium titanium yellow, light red, chromium oxide green, mars black, viridian, yellow ocher, alumina white, cadmium yellow, cadmium red, vermilion, lithopone, ultramarine, talc, white carbon, clay, mineral violet, rose cobalt violet, silver white, calcium carbonate, magnesium carbonate, zinc oxide, zinc sulfide, strontium sulfide, strontium aluminate, brass, gold dust, bronze powder, aluminum powder, brass pigment, ivory black, peach black, lamp black, carbon black, Prussian blue, aureolin, titanium mica, yellow ocher, terre verte, raw sienna, raw umber, cassel earth, chalk, plaster, burnt sienna, burnt umber, lapis lazuli, azurite, malachite, orpiment, cinnabar, coral powder, Gofun, red iron oxide, navy blue, deep blue, argentine, and iron oxide-treated pearl.

Among these colorants, carbon black is preferable as a black pigment in terms of hue and image storage stability. C.I. pigment blue 15:3, which is copper phthalocyanine blue, is preferable as a cyan pigment in terms of hue and image storage stability.

C.I. pigment red 122, which is quinacridone red, C.I. pigment red 269, which is naphthol red, and C.I. pigment red 81:4, which is rhodamine lake, are preferable as magenta pigments. One of these magenta pigments may be used alone or two or more of these magenta pigments may be used in combination. Among these magenta pigments, a mixture of C.I. pigment red 122 and C.I. pigment red 269 is more preferable in terms of hue and image storage stability. As the mixture of C.I. pigment red 122 (P.R.122) and C.I. pigment red 269 (P.R.269), a mixture in which P.R.122:PR.269 is 5:95 or greater but 80:20 or less is particularly preferable. When P.R.122:PR.269 is in the particularly preferable range, the hue does not fall out of magenta colors.

C.I. pigment yellow 74, which is monoazo yellow, C.I. pigment yellow 155, which is disazo yellow, C.I. pigment yellow 180, which is benzimidazolone yellow, and C.I. pigment yellow 185, which is isoindolinone yellow, are preferable as yellow pigments. Among these yellow pigments, C.I. pigment yellow 185 is more preferable in terms of hue and image storage stability. One of these yellow pigments may be used alone or two or more of these yellow pigments may be used in combination.

When using the flying target material as a process color ink serving as a colorant, it is preferable to use the flying target material in the form of an ink set including inks of four colors.

Many inorganic pigments are formed of particles having a volume average particle diameter greater than 10 micrometers. When using an inorganic pigment having a volume average particle diameter of 10 micrometers or greater as a colorant, it is preferable that the colorant be a liquid. When the colorant is a liquid, there is an advantage that the colorant can be maintained in a stable state without using forces other than non-electrostatic adhesive forces, i.e., without using, for example, an electrostatic force. In this case, the image forming method of the present disclosure is very effective compared with inkjet recording methods that cannot be highly expected as stable continuous printing processes because obvious nozzle clogging and ink sedimentation tend to occur. Moreover, the image forming method of the present disclosure is very effective compared with electrophotography methods that cannot be established as stable continuous printing processes when colorant particles cannot be sufficiently charged because of having a small surface area.

Examples of the dye include monoazo dyes, polyazo dyes, metal complexed azo dyes, pyrazolone azo dyes, stilbene azo dyes, thiazole azo dyes, anthraquinone derivatives, anthrone derivatives, indigo derivatives, thioindigo derivatives, phthalocyanine dyes, diphenylmethane dyes, triphenylmethane dyes, xanthene dyes, acridine dyes, azine dyes, oxazine dyes, thiazine dyes, polymethine dyes, azomethine dyes, quinoline dyes, nitro dyes, nitroso dyes, benzoquinone dyes, naphtoquinone dyes, naphthalimide dyes, and perinone dyes.

The viscosity of the colorant is not particularly limited and may be appropriately selected depending on the intended purpose.
A liquid colorant that can permeate a recording medium may feather or bleed when the colorant is attached on the recording medium. As compared, a high-viscosity colorant that can be handled by the image forming apparatus of the present disclosure has a drying speed higher than the speed at which the colorant permeates a recording medium, and can reduce bleeding in particular, improve color developability, and sharpen edge portions. Therefore, a high-viscosity colorant can form a high-quality image. Moreover, for half-toning by overprinting that overlays a colorant on a colorant, a high-viscosity colorant can reduce bleeding that is due to increase in the amount of the colorants.
Moreover, the present image forming method attaches a liquid colorant by flying the liquid colorant. Therefore, as compared with, for example, so-called thermal transfer methods that melt a colorant on a film-shaped colorant bearing member by heat and transfer the melted colorant, the present image forming method can realize preferable recording even when a recording medium has minute bosses and recesses.

The average thickness of the colorant is not particularly limited, may be appropriately selected depending on the intended purpose, and is preferably 100 micrometers or less. When the average thickness of the colorant is 100 micrometers or less, the energy for flying the colorant can be reduced. Therefore, there are advantages that the colorant bearing member is durable and the colorant composition is not likely to decompose when the colorant is an organic substance. The preferable range of the average thickness varies depending on the recording medium and the intended purpose.

For example, when coat paper or a smooth film used in typical offset printing is used as a recording medium, the average thickness of the colorant is preferably 0.5 micrometers or greater but 5 micrometers or less. When the average thickness of the colorant is in the preferable range, color difference due to minute variation in the average thickness of the recording medium cannot easily be recognized by human eyes. Hence, there are advantages that an image having a high saturation can be formed even on coat paper, and a sharp image is likely to be expressed without considerable dot gains of halftone dots.

For example, when a recording medium such as high-quality paper used in offices, i.e., a recording medium having a greater surface roughness than coat paper and films is used, the average thickness of the colorant is preferably 3 micrometers or greater but 10 micrometers or less. When the average thickness of the colorant is within the preferable range, a good image quality is likely to be obtained without influence of the surface roughness of the recording medium. Besides, particularly when a full-color image is expressed with process-color colorants, an obvious feeling of surface height difference is not likely to be felt even when films (layers) of a plurality of colorants are overlaid.

Moreover, for example, for printing in which cloths or fibers are dyed, the average thickness of the colorant often needs to be 5 micrometers or greater when attaching the colorant on, for example, cotton, silk, and chemical fibers serving as recording media. This is because a more colorant is often needed because the thickness of the fiber is greater than the thickness of paper.

When the flying target material is a liquid, it is preferable that the flying target material contain a surface tension regulator.
It has been found possible to form a flying body having a desired size by adjusting the surface tension of the flying target material within a preferable range. That is, when the flying body generating method of the present disclosure is applied to an image forming method and a three-dimensional object producing method, it is possible to attach a liquid droplet (flying target material) in a desired amount on an attaching target.

The region of a surface of the base material on which the flying target material is disposed is not particularly limited and may be appropriately selected depending on the intended purpose so long as the surface on which the flying target material is disposed can be irradiated with a laser beam through the base material from a surface of the base material opposite to the surface on which the flying target material is disposed.
The shape of the region of a surface of the base material on which the flying target material is disposed is not particularly limited and may be appropriately selected depending on the intended purpose.
The area of the region of a surface of the base material on which the flying target material is disposed is not particularly limited and may be appropriately selected depending on the intended purpose.

---Assisting film---

The assisting film is not particularly limited and may be appropriately selected depending on the intended purpose so long as the assisting film has a high absorptivity to the energy of a laser beam used and has an excellent heat conducting property. As the assisting film, a solid film or a powder film described above as the light absorbing material can be used.
For example, when a laser beam used is a laser beam having a wavelength within a visible light range, for example, gold and copper are preferable as the assisting film. When a laser beam used is a laser beam having a wavelength within an ultraviolet light range, for example, silver and titanium are preferable as the assisting film.

The method for forming the assisting film is the same as the method for forming a solid film or a powder film described above as the light absorbing material.

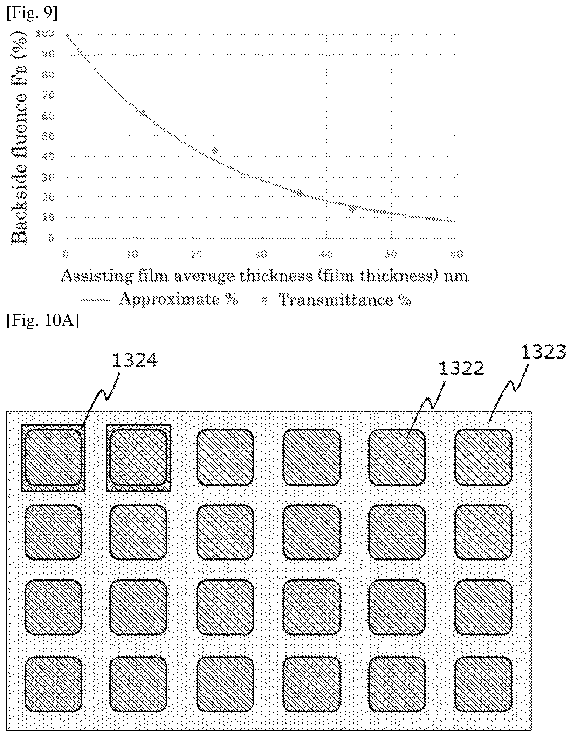

The average thickness (film thickness) of the assisting film will be described below with reference to the drawings. FIG. 9 is a graph plotting an example of a relationship between a film thickness of a film formed only of gold and serving as an assisting film and transmittance (backside fluence $F_B$) of a laser beam. Because gold has a high coefficient of absorption to a laser beam, the transmittance of a laser beam through gold drops to around 10% at a gold film thickness of merely about 50 nm. That is, when the energy of a laser beam on a laser beam-irradiated surface (frontside) of a film formed only of gold is assumed to be 100%, the surface (backside) of the film formed only of gold opposite to the irradiated surface is irradiated with merely 10% of the energy. In this case, the assisting film may not reach the melting temperature of the assisting film, and may fail in flying the flying target unless the incident energy is raised excessively.
Hence, the assisting film needs to have an appropriate film thickness for high-quality flying. Considering a heat conducting property, it is preferable that the fluence $F_B$ of a laser beam on a surface on which the flying target material is disposed be higher than or equal to 20% of the fluence $F_F$ of the laser beam on a surface of the base material irradiated with the laser beam. Taking these factors into consideration, the average thickness (film thickness) of the assisting film is preferably 40 nm or less and more preferably 25 nm or less. As the average thickness (film thickness) of the assisting film, an average of measured values obtained from a base material on which the assisting film is formed, using a spectroscopic ellipsometer, is used.

Accordingly, in the way described above, the film thickness of the assisting film is set in accordance with the laser beam absorption property of the flying target material as a non-light absorbing material, and a uniformly heated region having a temperature higher than or equal to the melting point is generated at the interface between the base material (transparent body) and the flying target material, to apply pressure generated by this heat to the flying target material as energy that enables the flying target material to fly. This makes it possible to fly the flying target material in a manner to be attached on a target while suppressing scattering of the flying target material.

It is preferable that the assisting film include a light absorbing region that absorbs a laser beam and a non-light absorbing region that does not absorb a laser beam.

When an ideal top hat beam is used as the uniformly heating beam, edges of the laser beam generate an outward pressure and make the flying target material more likely to scatter, because the edges of the laser beam have greater energy level differences and are steeply distributed in a cross-sectional intensity distribution. Hence, an ideal top hat beam cannot be the optimum condition.

Hence, as illustrated in FIG. 10A, an assisting film including light absorbing regions that absorb a laser beam and a non-light absorbing region that does not absorb a laser beam is used.

FIG. 10A is an exemplary diagram illustrating an example when an assisting film including light absorbing regions formed of a light absorbing material and a non-light absorbing region formed of a non-light absorbing material is disposed on a base material. As illustrated in FIG. 10A, light absorbing regions 1322 are disposed in a manner to be surround by a non-light absorbing region. The term "non-light absorbing region" used herein means a film region into which almost no light is absorbed, and includes a case where the film itself is a material that does not almost absorb light, and a case where the film is a material that reflects light on the surface and cannot absorb light. Light absorbing regions 1322 formed of a light absorbing material that absorbs light, such as gold, are arranged in a pattern on a non-light absorbing region 1323 that does not absorb a laser beam used. FIG. 10A also illustrates a region 1324 that is to be irradiated with a laser beam.

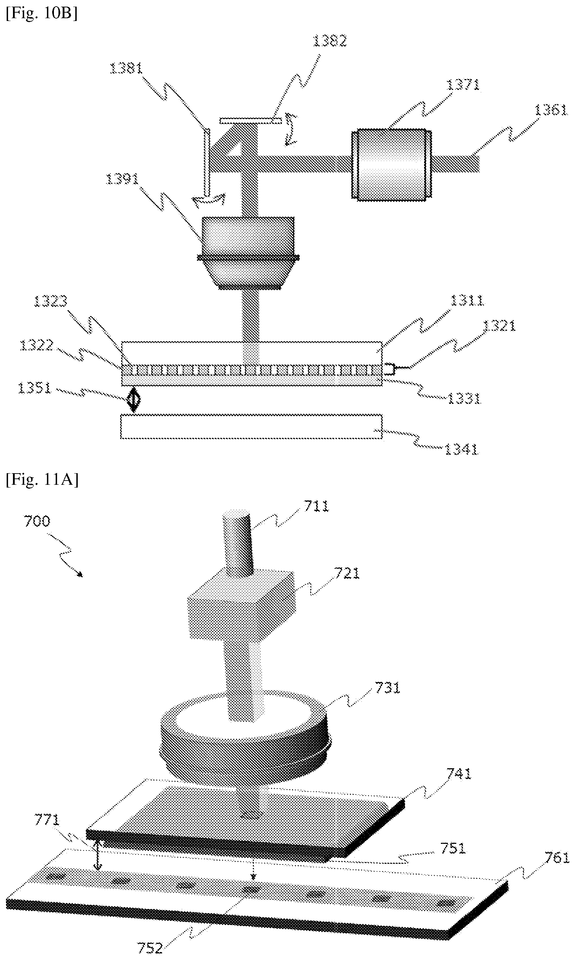

FIG. 10B is an exemplary view illustrating an example when a base material on which the pattern of the light absorbing regions illustrated in FIG. 10A is formed is irradiated with a laser beam.

As illustrated in FIG. 10B, an assisting film 1321 including patterned light absorbing regions 1322 and a non-light absorbing region 1323 is disposed on a transparent body (base material) 1311, and a solid film 1331 serving as the flying target material is disposed on the assisting film 1321. When generating a flying body, the base material is irradiated with a laser beam 1361 emitted from an unillustrated light source from a surface of the base material opposite to a surface on which the flying target material is disposed, through a beam profile complier 1371 serving as a uniformly heating laser beam transforming unit, a Y-deflecting mirror 1381 and an X-deflecting mirror 1382 of an X-Y galvano scanner, and a scanning lens 1391. Here, as illustrated in FIG. 10A, the base material is irradiated with a laser beam in a manner that the laser beam covers a single light absorbing region 1322 (laser beam irradiation region 1324). By irradiating the base material with a laser beam in a manner that the laser beam covers a single light absorbing region 1322, it is possible to suppress scattering that may occur by the edges of the laser beam. FIG. 10B also illustrates an attaching target 1341 and a gap 1351 between the transparent body (base material) 1311 and the attaching target 1341.

Moreover, by arranging the light-absorbing regions and the non-light absorbing region in a manner to have a suitable pitch (center-to-center distance), it is possible to significantly reduce the amount of scattering. This makes it possible to generate a drawn pattern having a high resolution, such as imaging at several hundreds of dpi.

The flying body generating method using an assisting film is verified in the manner described below.

In the following description, an image forming apparatus including the flying target material flying unit illustrated in FIG. 11A is used.

<Confirmation of assisting film behavior>

<Base material, flying target material, and attaching target>

As the flying target material, a film formed only of gold is vapor-deposited on a glass slide (available from Matsunami Glass Ind., Ltd., MICRO SLIDE GLASS S7213, with a transmittance of 99% to light having a wavelength of 532 nm) serving as a base material.

Next, the base material is set in a manner that the surface of the base material to which the flying target material is applied is faced with an attaching target (transfer medium) and the flying target material can be irradiated with a laser beam perpendicularly from the back of the flying target material.

The clearance (gap) between the attaching target (transfer medium) and the flying target material is set to 200 micrometers.

The laser with which the flying target material is irradiated using the image forming apparatus illustrated in FIG. 11A is as follows.

The flying target material flying unit includes, for example, a laser light source, a laser beam shaping unit, and a laser beam transforming unit.

The flying target material flying unit of the flying body generating apparatus illustrated in FIG. 11A includes a scanning optical system mounted with a galvano scanner.

First, a laser emitted by a Nd:YAG laser light source unit having a wavelength of 1,064 nm is passed through a spatial isolator, a $\lambda/4$ plate, and a collimator lens. An acoustooptic modulator (AOM) time-divides the laser to 0-order light and primary light based on an ON/OFF signal from a PC and a controller. In this way, the frequency of the laser light source is controlled. The 0-order light is cut when passing through mirrors and lenses, and only the primary light passes a nonlinear optical crystal (SHG element). As a result, under nonlinear optical effects, a second harmonic (SHG) is generated, and green light having a wavelength of 532 nm is generated. A harmonic separator HS obtains a beam having a single color of green by separating a fundamental harmonic and a second harmonic from each other. The phase distribution and the intensity distribution of the obtained green light are corrected by aberration correction or by an aspect ratio magnification variation element, and then the green light is passed through a zoom lens to be made incident into the phase distribution converting unit illustrated in FIG. 8 configured to transform incident light into a uniformly heating laser beam.

Subsequently, the uniformly heating laser beam is passed through mirrors, ND, and other optical elements and reflected by a light deflector such as a galvano mirror, so that a surface or an interior of the sample (a light absorbing material, a magenta ink) is irradiated with the beam through a condenser lens (with a focal length of 100 mm). One-shot optical exposure is performed at an outer diameter of 100 micrometers, the ratio ho (FWHM/($1/e^2$ width)) of 0.85, a scanning speed of 200 mm/s, and 400 micrometer intervals.

The laser beam profile is a square having a size of 100 micrometers on each side. The irradiation energy is 9 microjoules. The fluence is 0.09 J/cm$^2$.

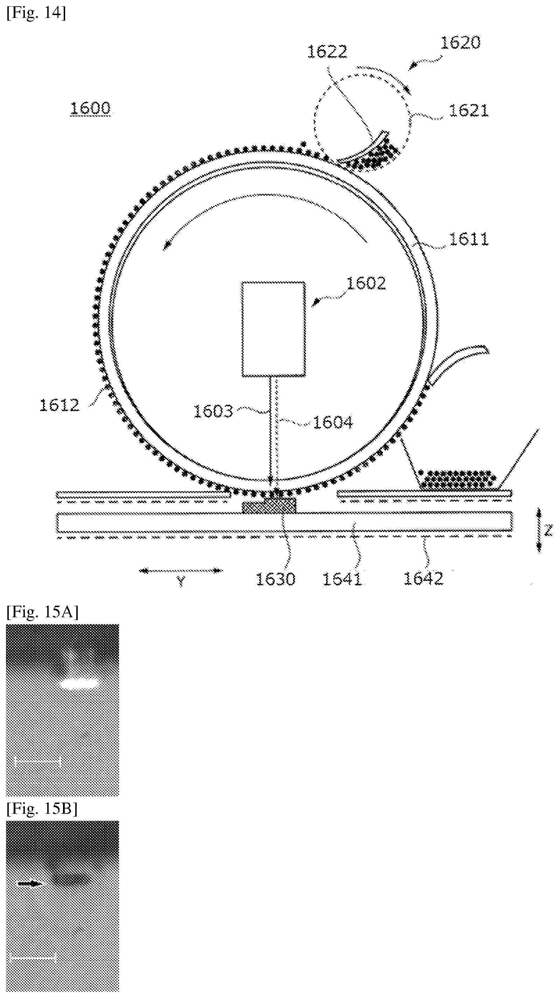

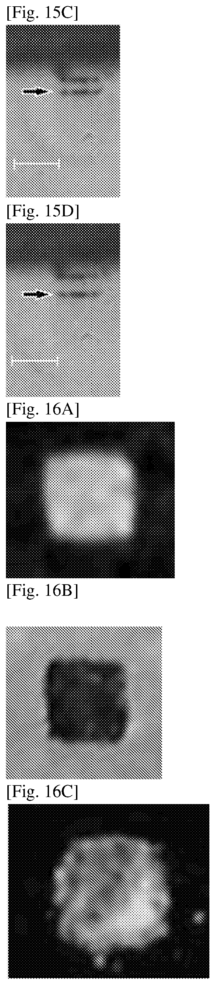

FIG. 15A to FIG. 15D illustrate captured images of a flying body captured at each 100 ns step using a high-speed camera (available from Shimadzu Corporation, apparatus name: HIGH-SPEED VIDEO CAMERA HYPER VISION HPV-X2) from a direction orthogonal to the irradiating direction of the laser beam. FIG. 15A illustrates an image at 0 ns after laser beam irradiation (at the timing of irradiation). FIG. 15B illustrates an image at 100 ns after laser beam irradiation. FIG. 15C illustrates an image at 200 ns after laser beam irradiation. FIG. 15D illustrates an image at 300 ns after laser beam irradiation.

The black band indicated by the arrows in the drawings is the flying body (flying target material, gold), and the black band appearing above the flying body and not indicated by the arrows is the shadow of the flying body that is captured due to the nature of the high-speed camera. The scale bar represents 100 micrometers.

As illustrated in FIG. 15A to FIG. 15D, it is successfully confirmed that the flying target material irradiated with the uniformly heating laser beam flies in the irradiating direction of the laser beam (downward in the drawings) while maintaining the flat plate shape which the flying target material has been having on the base material.

<Pulse energy (fluence) when assisting film is used>

Next, a dot image is formed in the same manner as in <Confirmation of assisting film behavior>, except that a vapor-deposited gold film having a film thickness of 23 nm is disposed as an assisting film on a glass slide base material, and as the flying target material, a water-based slurry of non-crosslinked acrylic nanoparticles (100 nm) diluted in ethanol is applied with a film thickness of 2 micrometers on the vapor-deposited gold film using a feeding roller.

First, burnt paper (available from Laser Create Corp., product name: LASER ALIGNMENT PAPER) is irradiated with a laser beam, and the shape of the laser beam with which the burnt paper is irradiated is confirmed. FIG. 16A illustrates the result. The length h of one side of the beam profile is 100 micrometers.

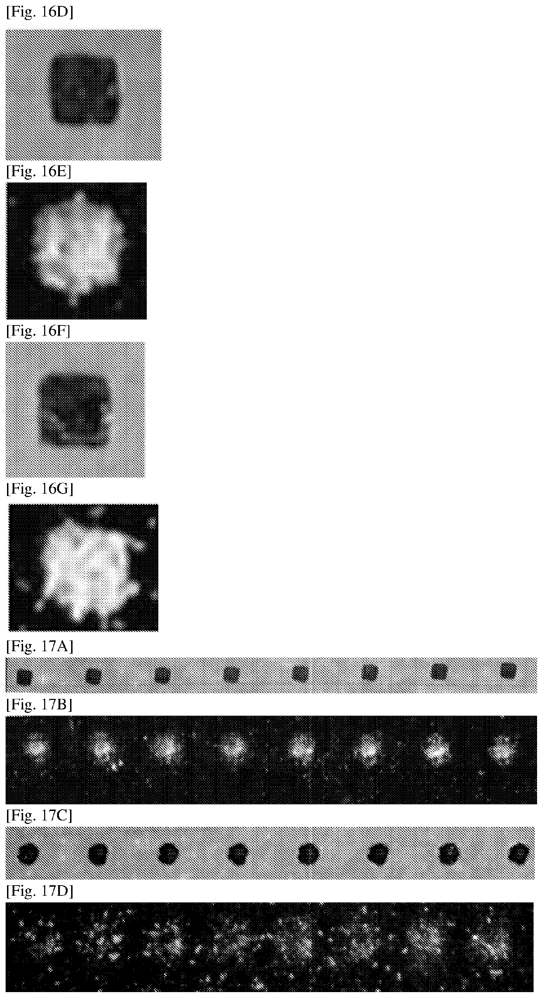

Next, the flying target material is transferred with change of the frontside fluence $F_F$ to 0.3 J/cm$^2$, and the size of a remaining donor image of the flying target material on the base material after transfer and the size of the flying target material attached on the attaching target medium are confirmed. FIG. 16B and FIG 16C illustrate the results. FIG. 16B illustrates the remaining donor image of the flying target material. FIG. 16C illustrates the image of the flying target material attached on the attaching target medium. FIG. 16D and FIG. 16E illustrate the results obtained in the same manner with change of the frontside fluence $F_F$ to 0.2 J/cm$^2$. FIG. 16F and FIG. 16G illustrate the results obtained in the same manner with change of the frontside fluence $F_F$ to 0.1 J/cm$^2$. FIG. 16D and FIG. 16F illustrate the remaining donor image of the flying target material. FIG. 16E and FIG. 16G illustrate the image of the flying target material attached on the attaching target medium. The size of the drawings of FIG. 16B to FIG. 16G reflect the proportions of the real objects.

It can be seen from FIG. 16B to FIG. 16G that a higher pulse energy (frontside fluence $F_F$) makes the size of a transferred image larger. When the size of the remaining donor image of the flying target material on the base material after transfer is regarded as the reference, the size of the transferred image has increased by about 20% when the frontside fluence $F_F$ is changed to 0.3 J/cm$^2$, the size of the transferred image has increased by about 10% when the frontside fluence $F_F$ is changed to 0.2 J/cm$^2$, and the size of the transferred image has remained almost the same when the frontside fluence $F_F$ is changed to 0.1 J/cm$^2$.

From these results, the frontside fluence $F_F$ of the laser beam in the flying body generating method using an assisting film, although different depending on the materials, is preferably 20 mJ/cm$^2$ or higher but 800 mJ/cm$^2$ or lower and more preferably 100 mJ/cm$^2$ or higher but 500 mJ/cm$^2$ or lower. When the frontside fluence $F_F$ is 20 mJ/cm$^2$ or higher but 800 mJ/cm$^2$ or lower, it is possible to transfer the flying body with a good transfer accuracy.

Next, embodiments of the flying body generating apparatus of the present disclosure will be described with reference to the drawings.

FIG. 11A is an exemplary view illustrating an example of the flying body generating apparatus of the present disclosure. As illustrated in FIG. 11A, the flying body generating apparatus 700 of the present disclosure includes a laser beam 711 emitted from an unillustrated light source, a beam transforming optical system 721, and a condensing optical system 731, and is used together with a base material 741, a flying target material 751, and an attaching target medium 761. In the flying body generating apparatus 700, the laser beam 711 emitted from the unillustrated light source passes through, for example, fθ lenses serving as the beam transforming optical system 721 and the condensing optical system 731, in order that the flying target material 751 may be irradiated with the laser beam 711 through the base material 741. The flying target material 751 irradiated with the laser beam 711 flies to and attaches (as a flying target material 752 after attached) on the attaching target medium 761 provided counter to the flying target material 751 disposed on the base material 741 with a clearance (gap) 771. An unillustrated gap maintaining unit can adjust the clearance (gap) 771 between the flying target material 751 and the attaching medium 761, and an unillustrated position adjusting unit can adjust the position of the attaching target medium 761 in the planar direction.

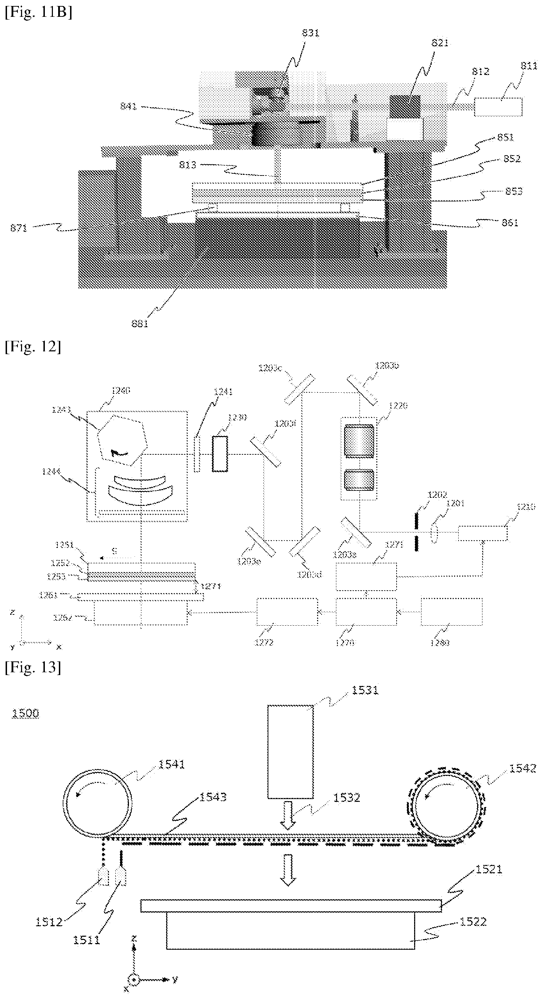

FIG. 11B is an exemplary view illustrating another example of the flying body generating apparatus of the present disclosure.

As illustrated in FIG. 11B, the drawing is an axisymmetrical model for facilitating understanding. As illustrated in FIG. 11B, the flying body generating apparatus includes a light source 811, a beam transforming optical system 821, an (X-Y) galvano scanner 831 serving as a scanning optical system, and a condenser lens 841 serving as a condensing optical system, and a transparent body (base material) 851 having a surface including a flying target material 853 and an assisting film 852 in at least a part of the surface can be set on a sample table 881. The flying body generating apparatus also includes a gap maintaining member 871 configured to provide a gap between the transparent body (base material) 851 and an attaching target (acceptor substrate) 861. The flying body generating apparatus is configured to transform a Gaussian laser beam 812 emitted by the light source 811 into a uniformly heating laser beam 81 through the beam transforming optical system 821.

In the example of the flying body generating apparatus illustrated in FIG. 11B, a flying target material flying unit including the light source 811, the beam transforming optical system 821, the galvano scanner 831 serving as the scanning optical system, and the condenser lens 841 irradiates the transparent body (base material) 851 with the uniformly heating laser beam 813 from a surface of the transparent body (base material) 851 opposite to the surface on which the flying target material 853 is disposed, to fly the flying target material 853 in the irradiating direction of the uniformly heating laser beam 813. In the example of the flying body generating apparatus illustrated in FIG. 11B, the flown flying target material 853 (flying body) attaches on the attaching target (target) 861.

FIG. 12 illustrates an example of another embodiment of the flying body generating apparatus of the present disclosure.

The flying body generating apparatus of the present disclosure includes a laser light source 1210, a beam shaping optical system 1220, a beam transforming optical system 1230, a scanning optical system 1240, an attaching target medium 1261, a moving stage 1262 configured to move a sample, and a host computer 1270. The host computer 1270 is configured to output an input signal into an exposure condition setting unit 1271 based on process target image data 1280 to cause an output from the light source 1210 based on an output signal from the exposure condition setting unit 1271.

The laser beam output from the laser light source 1210 passes through a condenser lens 1201, and a beam expander (BEX) 1202 expands the laser beam to an appropriate beam.

Posterior to the beam expander 1202, the flying body generating apparatus includes a unit configured to vary the magnification of the cross-sectional shape of the incident laser beam and a unit configured to convert the phase distribution of the incident laser beam wavefront in order to form a high-quality beam profile on a sample surface.

The incident laser beam passes through the beam shaping optical system 1220, and many loopback mirrors needed for scanning the laser beam three-dimensionally in x, y, and z directions. In FIG. 12, there are six loopback mirrors 1203a to 1203f. However, ten or more mirrors and an optical element 1241 may be provided.

After passing through the plurality of mirrors, the optical element 1241, and the beam transforming optical system 1230, the laser beam is reflected by the scanning optical system 1240 including an optical deflector 1243 such as a galvano mirror and a polygon mirror, and the surface or the interior of the base material 1251 is irradiated with the laser beam through a condenser lens 1244. For example, the laser beam may be scanned in the direction of S in FIG. 12 while the base material is irradiated with the laser beam.

The base material 1251 illustrated in FIG. 12 has an assisting film 1252 and a flying target material 1253 in this order on a surface thereof opposite to a surface to be irradiated with a laser beam.

The position of the sample table is controlled based on a coordinates control signal 1272 from a host computer 1270 in a manner that the gap 1271 between a film (layer) of the flying target material 1253 and an attaching target 1261 becomes a desired distance by a sample stage. A small gap is preferred in order to suppress scattering, but a large gap is preferred considering operability, reproducibility, and throughput. Therefore, the gap is preferably 0.05 mm or greater but 0.5 mm or less.

What matters for transformation into a desired beam is the shape of the energy intensity distribution of a laser beam and the shape of a transmitted wavefront of the laser beam in a cross-section of the incident laser beam orthogonal to the travelling direction of the incident laser beam. A laser beam shaping unit is advantageous for this purpose.

The laser beam shaping unit will be described below.

A magnification variation unit configured to vary the ratio of one beam diameter to another beam diameter orthogonal to the one beam diameter in a cross-section of an incident laser beam perpendicular to the optical axis of the incident laser beam, and a unit configured to convert the phase distribution of an incident laser beam wavefront are disposed at a light source side of a condenser lens, in order that the incident laser beam can form a desired cross-sectional shape and a desired transmitted wavefront on the front surface of the condenser lens.

In order to perform optimum uniformly heating irradiation, there is a need for selecting a laser beam wavelength suitable for the flying target material. Not only visible light, but also infrared light and ultraviolet light can be appropriately selected depending on the intended purpose.

(Image forming method and image forming apparatus)

An image forming method of the present disclosure includes the flying body generating method of the present disclosure and a transfer step of transferring a flying target material flown by the flying body generating method to a transfer medium, and further includes other steps as needed. An image forming apparatus of the present disclosure includes the flying body generating apparatus of the present disclosure and a transfer unit configured to transfer a flying target material flown by the flying body generating apparatus to a transfer medium, and further includes other units as needed.

The image forming method of the present disclosure can be suitably performed by the image forming apparatus of the present disclosure. The flying target material flying step can be suitably performed by the flying target material flying unit. The transfer step can be suitably performed by the transfer unit. The other steps can be suitably performed by the other units.

The image forming method and the image forming apparatus of the present disclosure are the same as the flying body generating method and the flying body generating apparatus of the present disclosure and will not be described redundantly, except the transfer step and the transfer unit.

<Transfer step and transfer unit>

The transfer step is a step of transferring a flown flying target material to a transfer medium.

The transfer unit is a unit configured to transfer a flown flying target material to a transfer medium.

The transfer unit is not particularly limited d may be appropriately selected depending on the intended purpose. Examples of the transfer unit include a unit including a mechanism configured to bring a flying body formed of the flying target material into contact with a transfer medium. Specifically, the transfer unit may include, for example, a mechanism configured to adjust the gap between an attaching target and the flying target material, and a mechanism configured to convey the attaching target.

-Transfer medium-

The transfer medium (attaching target) is not particularly limited and may be appropriately selected depending on the intended purpose so long as a liquid column or a liquid droplet formed of the flying target material can contact the transfer medium. Examples of the transfer medium include a recording medium and an intermediate transfer belt used in, for example, an image forming apparatus.

<Other steps and other units>

Examples of the other steps include a flying target material feeding step, a beam scanning step, an attaching target conveying step, a fixing step, and a controlling step.

Examples of the other units include a flying target material feeding unit, a beam scanning unit, an attaching target conveying unit, a fixing unit, and a controlling unit.

The flying target material flying unit, the base material, the flying target material feeding unit, and the beam scanning unit may be handled integrally as a flying target material flying unit.

The flying target material feeding unit is not particularly limited and may be appropriately selected depending on the intended purpose so long as the flying target material feeding unit can feed the flying target material to a base material in a manner that the flying target material is present on an optical path of the laser beam between the flying target material flying unit and the attaching target. Examples of the flying target material feeding unit include a unit configured to feed the flying target material to a base material using a dispenser-type applying unit, and a unit configured to feed the flying target material through a cylindrical base material disposed on an optical path.

When feeding the flying target material, which is a liquid, to the base material, it is preferable to provide a feeding roller and a regulating blade as the flying target material feeding unit, because it is possible to feed the flying target material having a constant average thickness to a surface of the base material using very simple configurations.

In this case, with the surface of the feeding roller partially dipped in a storage tank storing the flying target material, the feeding roller rotates while bearing the flying target material on the surface thereof, and comes into contact with the base material and feeds the flying target material to the base material. The regulating blade is disposed downstream of the storage tank in the rotation direction of the feeding roller, regulates the flying target material borne on the feeding roller to make the average thickness of the flying target material uniform and stabilize the amount of the flying target material to be flown. By making the average thickness very small, it is possible to suppress the amount of the flying target material to be flown, making it possible to suppress scattering of the flying target material, attach the flying target material on the attaching target as a minute dot, and suppress dot gain, which is growth of halftone dots. The regulating blade may be disposed downstream of the feeding roller in the rotation direction of the base material.

When the flying target material has a high viscosity, it is preferable that the constituent material of the feeding roller have elasticity at least on the surface in order that the flying target material may have a secure contact with the base material. When the flying target material has a relatively low viscosity, examples of the feeding roller include a gravure roll, a microgravure roll, and a forward roll used in precision wet coating.

Moreover, the flying target material feeding unit may be configured without a feeding roller, so that the base material may be directly brought into contact with the flying target material in the storage tank and subsequently any excessive flying target material may be scraped away by, for example, a wire bar, to form a film (layer) of the flying target material on the surface of the base material. The storage tank may be provided separately from the flying target material feeding unit and configured to deliver the flying target material to the flying target material feeding unit through, for example, a hose.

The flying target material feeding step is not particularly limited and may be appropriately selected depending on the intended purpose so long as the flying target material feeding step is a step of feeding the flying target material to an optical path of the laser beam between the flying target material flying unit and an attaching target. The flying target material feeding step can be suitably performed by, for example, the flying target material feeding unit.

FIG. 13 is a view illustrating an example of the image forming apparatus of the present disclosure.

The flying target material feeding unit includes a flying target material feeding unit 1511 configured to feed the flying target material, an assisting film material applying unit 1512 configured to apply the material of an assisting film on a base material 1543, a conveying roller 1541, and a sheet collecting roller 1542.

Examples of the applying method employed by the flying target material feeding unit 1511 and the assisting film material applying unit 1512 include a dispenser method. FIG. 13 illustrates an example of the dispenser method, and the flying target material feeding unit 1511 and the assisting film material applying unit 1512 include syringe units configured to discharge the flying target material and the assisting film material.

The assisting film may be previously applied on a bearing member, and the image forming apparatus may apply only the flying target material to the base material. A plurality of flying target material feeding units may be used to apply different kinds of flying target materials.

The flying target material feeding unit 1511 and the assisting film material applying unit 1512 follow the rotation of the conveying roller 1541 and apply the flying target material and the assisting film material to the base material 1543. In this way, these materials are fed in the form of films (layers). The base material 1543 bears the applied flying target material and assisting film material on the surface of the base material 1543 facing the attaching target 1521 by intermolecular forces. Air suctioning or electrostatic attraction may enhance the bearing force of the base material 1543 for bearing the flying target material and the assisting film material.

The base material 1543 is previously wound around the conveying roller 1541, and one end of the wound base material 1543 is coupled to the sheet collecting roller 1542 disposed apart from the conveying roller 1541 in the +y direction.

The sheet collecting roller 1542 is rotated by a driving unit such as a motor and takes up the base material 1543, and the base material 1543 travels in the +y direction by this takeup operation. The conveying roller 1541 rotates following the travelling of the base material 1543 and sends out the wound base material 1543 to the sheet collecting roller 1542.

The base material 1543 travels while bearing the flying target material, and a part of the base material 1543 having come to face a light irradiation unit 1531 disposed between the conveying roller 1541 and the sheet collecting roller 1542 is irradiated with a laser beam 1532 by the light irradiation unit 1531. Then, a process for flying the flying target material from the base material 1543 and a process for fixing the flying target material on the attaching target 1521 are performed. By the rotation of the conveying roller 1541, the flying target material fed to the base material 1543 is continuously delivered to the position to be irradiated with the laser beam 1532. After the processes, the flying target material is collected together with the base material 1543 by the sheet collecting roller 1542. FIG. 13 also illustrates a stage 1522.

The beam scanning step is not particularly limited and may be appropriately selected depending on the intended purpose so long as the beam scanning step is a step of scanning a laser beam on the flying target material. For example, the beam scanning step can be suitably performed using the beam scanning unit.

The attaching target conveying unit is not particularly limited and may be appropriately selected depending on the intended purpose so long as the attaching target conveying unit can convey the attaching target. Examples of the attaching target conveying unit include a pair of conveying rollers.

The attaching target conveying step is not particularly limited and may be appropriately selected depending on the intended purpose so long as the attaching target conveying step is a step of conveying the attaching target, and can be suitably performed using, for example, the attaching target conveying unit.

The fixing unit is not particularly limited and may be appropriately selected depending on the intended purpose so long as the fixing unit can fix the flying target material attached on the attaching target. Examples of the fixing unit include a thermocompression bonding system using a heating/pressurizing member.

The heating/pressurizing member is not particularly limited and may be appropriately selected depending on the intended purpose. Examples of the heating/pressurizing member include a heating roller, a pressurizing roller, and a combination of a heating roller and a pressurizing roller. Other examples of the heating/pressurizing member include a combination of these members with a fixing belt, and a combination of these members but using a heating block instead of the heating roller.

It is preferable that the pressurizing roller have a pressurizing surface that moves at the same speed as the attaching target conveyed by the attaching target conveying unit, in terms of suppressing image degradation due to friction. Above all, a pressurizing roller including an elastic layer near the surface thereof is preferable because such a roller can easily contact and pressurize the attaching target. Moreover, a pressurizing roller including at the outermost surface, a water-repellent surface layer formed of a material having a low surface energy such as silicone-based water-repellent materials and fluorine compounds is particularly preferable in terms of suppressing image disorder due to adhesion of the flying target material to the surface. Examples of the water-repellent surface layer formed of a silicone-based water-repellent material include a coating film formed of a silicone-based release agent, an enameled film formed of a silicone oil or various kinds of modified silicone oils, a coating film formed of silicone varnish, a silicone film formed of a silicone rubber, and a coating film formed of a composite material between a silicone rubber and various metals, rubbers, plastics, and ceramics.

Examples of the water-repellent surface layer formed of a fluorine compound include a coating film formed of a fluorine resin, a coating film formed of an organic fluorine compound, an enameled film or an adsorption film formed of an fluorine oil, a coating film formed of a fluorine rubber, and a coating film formed of a composite material between a fluorine rubber and various metals, rubbers, plastics, and ceramics.

The heating temperature of the heating roller is not particularly limited, may be appropriately selected depending on the intended purpose, and is preferably 80 degrees C or higher but 200 degrees C or lower.

The fixing belt is not particularly limited and may be appropriately selected depending on the intended purpose so long as the fixing belt has heat resistance and a high mechanical strength. Examples of the fixing belt include films of, for example, polyimide, PET, and PEN. For the fixing belt, it is preferable to use the same material as the material forming the outermost surface of the pressurizing roller in terms of suppressing image disorder due to adhesion of the flying target material to the surface. By making the thickness of the fixing belt small, it is possible to suppress the energy for heating the belt, making it possible to use the fixing belt as soon as the fixing belt is turned on. Here, the temperature and the pressure vary depending on the composition of the flying target material to be fixed. However, the temperature is preferably 200 degrees C or lower in terms of energy saving, and the pressure is preferably 1 kg/cm or lower in terms of rigidity of the apparatus.

When using two or more kinds of flying target materials, it is possible to fix the flying target material each time the flying target material of any color is attached on the attaching target, or fix all of the flying target materials in a state that all of the light absorbing materials are attached and overlaid one upon another on the attaching target.

When the flying target material has an extremely high viscosity and it is difficult to improve the attaching speed at which the flying target material is attached on the attaching target because of slow drying of the flying target material, it is optional to additionally heat the attaching target to prompt drying.

When the flying target material has slow permeation and slow wetting on the attaching target and if such a flying target material is dried in a state that the flying target material attached is not sufficiently smoothed, the surface of the attaching target on which the flying target material is attached becomes rough and may not be able to have glossiness. **In** order that the surface of the attaching target may have glossiness, the fixing unit may perform fixing by pressurization in a manner to crush the flying target material attached on the attaching target and fix the flying target material as if to squeeze the flying target material into the attaching target, so that the attaching target may have a small surface roughness.

The fixing unit is needed in order to fix the flying target material on the attaching target particularly when the flying target material is a solid formed by compacting a powder. As needed, a known optical fixing unit may be used together with the fixing unit.

The fixing step is not particularly limited and may be appropriately selected depending on the intended purpose so long as the fixing step is a step of fixing the flying target material attached on the attaching target on the attaching target, and can be suitably performed using, for example, the fixing unit.

The controlling unit is not particularly limited and may be appropriately selected depending on the intended purpose so long as the controlling unit can control the operations of each unit. Examples of the controlling unit include devices such as a sequencer and a computer. The controlling step is a step of controlling each step and can be suitably performed by the controlling unit.

-Attaching target-

The attaching target (transfer medium) is not particularly limited and may be appropriately selected depending on the intended purpose. Examples of the attaching target include a recording medium on which an image is formed, and an object support substrate on which a three-dimensional object is formed.

--Recording medium--

The recording medium is not particularly limited and may be appropriately selected depending on the intended purpose. Examples of the recording medium include coat paper, high-quality paper, films, cloths, and fibers.

The clearance (gap) between the attaching target and the flying target material is not particularly limited and may be appropriately selected depending on the intended purpose so long as the attaching target and the flying target material are kept contactless from each other, and is preferably 0.05 mm or greater but 5 mm or less, more preferably 0.10 mm or greater but 2.0 mm or less, particularly preferably 0.2 mm or greater but 1.0 mm or less, and most preferably 0.10 mm or greater but 0.50 mm or less. When the gap between the attaching target and the flying target material is in the preferable range, there is an advantage that the accuracy of the position at which the flying target material is attached on the attaching target is not likely to degrade. By keeping the attaching target and the flying target material contactless from each other, it is possible to attach the flying target material on the attaching target regardless of the compositions of the flying target material and the attaching target. The present disclosure is particularly excellent in the attaching position accuracy when attaching the flying target material on the attaching target apart by at least 0.5 mm or greater.

Moreover, it is preferable that the gap be maintained constant by, for example, a position controlling unit configured to maintain the attaching target at a constant position. In this case, what matters is to dispose each component considering position fluctuation and average thickness variation of the flying target material and the attaching target.

The average diameter (average dot diameter) of the flying target material on the transfer medium (attaching target) after transferred (attached) there is not particularly limited, may be appropriately selected depending on the intended purpose, and is preferably 100 micrometers or less because the resolution of an image or a three-dimensional object to be formed is better improved. In the present disclosure, a flying liquid droplet flies with a diameter smaller than the diameter of the laser beam with which the liquid droplet is irradiated, but the diameter of the dot to be formed changes depending on the relationship between the impact when the liquid droplet lands on the transfer medium and the surface tension of the surface of the transfer medium.

The average dot diameter can be obtained by, for example, capturing images of dots of the flying target material with, for example, a microscope, detecting dot regions from the image luminance information, calculating the area of each dot based on the number of pixels in each dot region detected, converting the dot regions to circular shapes to obtain the diameters of the circular shapes as dot diameters, and averaging the dot diameters.

The variation of the diameter (dot diameter) of the flying target material on the transfer medium (attaching target) after transferred (attached) there is preferably 10% or lower, and more preferably 6% or lower. When the variation of the diameter of the flying target material on the transfer medium after transferred is in the preferable range described above, the accuracy of forming an image or a three-dimensional object can be better improved.

The variation of the diameter of the flying target material on the transfer medium after transferred can be obtained by, for example, capturing images of dots of the flying target material with, for example, a microscope, detecting dot regions from the image luminance information, calculating the area of each dot based on the number of pixels in each dot region detected, converting the dot regions to circular shapes to obtain the diameters of the circular shapes as dot diameters, and calculating the variation based on the average particle diameter and standard deviation of the particle diameter distribution of the dots.

The variation of the position (dot position) of the flying target material on the transfer medium (attaching target) after transferred (attached) there is preferably 10 micrometers or less and more preferably 5 micrometers or less. When the variation of the position of the flying target material on the transfer medium after transferred is in the preferable range described above, the accuracy of forming an image or a three-dimensional object can be better improved. The variation of the position of the flying target material on the transfer medium after transferred may be, for example, variation of the position of the flying target material in a direction orthogonal to a line of dots formed when dots of the flying target material are attached in a line.

The variation of the position of the flying target material on the transfer medium after transferred can be obtained by, for example, capturing images of dots of the flying target material with, for example, a microscope, detecting dot regions from the image luminance information, calculating the coordinates of the center of gravity of each dot region detected, and calculating the gap of each center of gravity from an approximate straight line obtained by the least-squares method of the centers of gravity.

The flying target material flying unit, the flying target material feeding unit, and the beam scanning unit may be handled integrally as a colorant flying unit.

For example, four colorant flying units may be provided in the image forming apparatus to fly colorants of yellow, magenta, cyan, and black colors, which are the process colors. The number of colors of the colorants is not particularly limited and may be appropriately selected depending on the intended purpose. As needed, the number of colorant flying units may be increased or decreased. A colorant flying unit including a white colorant can form a white hiding layer, if provided upstream of the colorant flying units including the process color colorants in the conveying direction of a recording medium. This makes it possible to form an image excellent in color reproducibility on a transparent recording medium. However, in some cases, there is a need for appropriately selecting laser light sources from among, for example, blue laser beams and ultraviolet laser beams in a manner that the light transmittance (absorbance) of particularly yellow, white, and transparent colorants with respect to laser beam wavelengths may be appropriate.

The image forming apparatus can use colorants having a high viscosity. Therefore, when forming an image by overlaying colorants of different colors sequentially on a recording medium, the image forming apparatus can suppress occurrence of bleeding, which is mixing between bleeding colorants, and can hence form a color image having a high image quality.

With a view to, for example, reducing the size of the image forming apparatus, it is optional to provide only one colorant flying unit in the image forming apparatus and form an image formed of a plurality of colors by switching between the colorants to be fed to the feeding roller and the colorant bearing member.

It is optional to apply the image forming apparatus of the present disclosure to a three-dimensional object producing apparatus as below.

(Three-dimensional object producing method and three-dimensional object producing apparatus)

A three-dimensional object producing method of the present disclosure includes the flying body generating method of the present disclosure, a transfer step of transferring a flying target material flown by the flying body generating method to a transfer medium, and a curing step of curing the flying target material transferred. The three-dimensional object producing method of the present disclosure repeats flying the flying target material in the flying target material flying step to the flying target material cured, and subsequently curing the flying target material uncured in the curing step, to produce a three-dimensional object. The three-dimensional object producing method of the present disclosure further includes other steps as needed.

A three-dimensional object producing apparatus of the present disclosure includes the flying body generating apparatus of the present disclosure, a transfer unit configured to transfer the flying target material flown by the flying body generating apparatus to a transfer medium, and a curing unit configured to cure the flying target material transferred. The three-dimensional object producing apparatus of the present disclosure repeats causing the flying target material flying unit to fly the flying target material to the flying target material cured, and subsequently causing the curing unit to cure the flying target material uncured, to produce a three-dimensional object. The three-dimensional object producing apparatus of the present disclosure further includes other units as needed.

The three-dimensional object producing method and the three-dimensional object producing apparatus of the present disclosure are the same as the image forming method and the image forming apparatus of the present disclosure except including the curing step and the curing unit in the image forming method and the image forming apparatus of the present disclosure, and repeating transferring the flying target material to the flying target material cured and curing the flying target material. Therefore, description of the three-dimensional object producing method and the three-dimensional object producing apparatus will be skipped except the differences.

<Curing step and curing unit>

The curing step is a step of curing the flying target material transferred.
The curing unit is a unit configured to cure the flying target material transferred.

The curing unit is not particularly limited and may be appropriately selected depending on the intended purpose. Examples of the curing unit include an ultraviolet irradiator when the flying target material is an ultraviolet-ray-curable material.

The three-dimensional object producing apparatus of the present disclosure can produce a three-dimensional object by repeating causing the flying target material flying unit to fly the flying target material to the flying target material already cured, and subsequently causing the curing unit to cure the flying target material uncured (yet to be cured).

<Other steps and other units>

Examples of the other steps include a flying target material feeding step, a three-dimensional object producing head unit scanning step, a substrate position adjusting step, and a controlling step.
Examples of the other units include a flying target material feeding unit, a three-dimensional object producing head unit scanning unit, a substrate position adjusting unit, and a controlling unit.

<<Flying target material feeding unit>>

The flying target material feeding unit is the same as the flying target material feeding unit described above except that the flying target material is a three-dimensional object forming agent and the attaching target is an object support substrate. Therefore, description of the flying target material feeding unit will be skipped.

<<Three-dimensional object producing head unit scanning unit>>

The three-dimensional object producing head unit scanning unit is not particularly limited and may be appropriately selected depending on the intended purpose. For example, the three-dimensional object producing head unit scanning unit may scan a three-dimensional object producing head unit in which a flying target material flying unit and a curing unit are integrated, over the object support substrate in a width direction (X axis direction) of the apparatus. For example, the three-dimensional object producing head unit may be configured to cause the curing unit to cure an ultraviolet-ray-curable flying target material applied by the flying target material flying unit. It is optional to provide a plurality of three-dimensional object producing head units.

<<Substrate position adjusting unit>>

The substrate position adjusting unit is not particularly limited and may be appropriately selected depending on the intended purpose. The substrate position adjusting unit may be, for example, a base (stage) that can adjust the position of the object support substrate in the depth direction (Y axis direction) and the height direction (Z axis direction) of the apparatus.

<<Controlling unit>>

The controlling unit is the same as the controlling unit of the image forming apparatus described above. Therefore, description of the controlling unit will be skipped.
The three-dimensional object forming agent contains at least a curable material and further contains other components as needed.

<<Curable material>>

The curable material is not particularly limited and may be appropriately selected depending on the intended purpose so long as the curable material is a compound that undergoes a polymerization reaction and cures in response to, for example, irradiation with active energy rays (e.g., ultraviolet rays and electron beams) and heating. Examples of the curable material include active-energy-ray-curable compounds, and thermosetting compounds. Among these materials, a material that is liquid at normal temperature is preferable.
The active-energy-ray-curable compound is a monomer containing a radical-polymerizable unsaturated double bond in a molecular structure thereof and having a relatively low viscosity. Examples of the active-energy-ray-curable compound include monofunctional monomers and multifunctional monomers.

<<Other components>>

The other components are not particularly limited and may be appropriately selected depending on the intended purpose. Examples of the other components include water, an organic solvent, a photopolymerization initiator, a surfactant, a colorant, a stabilizer, a water-soluble resin, a low-boiling-point alcohol, a surface treating agent, a viscosity modifier, a tackifier, an antioxidant, an age resistor, a cross-linking accelerator, an ultraviolet absorbent, a plasticizer, a preservative, and a dispersant.

-Object support substrate-

The object support substrate is not particularly limited and may be appropriately selected depending on the intended purpose. The substrate position adjusting unit may adjust the position of the object support substrate in the Y axis direction and the Z axis direction.

The gap between the object support substrate and the base material is the same as the gap between the attaching target and the base material. Therefore, description of the gap between the object support substrate and the base material will be skipped.

Next, an example of the three-dimensional object producing apparatus of the present disclosure will be described with reference to the drawings.

For example, the number, position, and shape of the constituent components described below are not limited to the present embodiment, and may be any number, position, shape that are suitable for working the present disclosure.

The three-dimensional object producing apparatus 1600 will be described with reference to FIG. 14. FIG. 14 is a diagram illustrating an example of the configuration of the three-dimensional object producing apparatus 1600.

The three-dimensional object producing apparatus 1600 includes a stage 1641, which is a supporting member configured to support an object to be produced (an object yet to be completed) 1630. The stage 1641 is reciprocably movable in the direction of the arrow Y, and is vertically movable in the direction of the arrow Z at a pitch of, for example, 0.05 mm, which is the object formation thickness.

A stage heater 1642 is disposed underneath the stage 1641, and the stage 1641 is controlled to a temperature suited to the flying target material 1612 serving as an object forming material.

A bearing member (base material) 1611 formed of a rotating member configured to bear the flying target material 1612 having a particle form is disposed above the stage 1641. The bearing member 1611 is formed of a rotating drum that rotates in the direction of the arrow (conveying direction) while bearing the flying target material 1612, and is configured to convey the flying target material 1612 to above an object 1630 on the stage 1641. The bearing member 1611 is a transparent member and is formed of a cylindrical glass member. However, this is non-limiting. The flying target material 1612 needs to be appropriately selected depending on an intended object 1630. Examples of the flying target material 1612 when it is a resin include PA12 (polyamide 12), PBT (polybutylene terephthalate), PSU (polysulfone), PA66 (polyamide 66), PET (polyethylene terephthalate), LCP (liquid crystal polymer), PEEK (polyether ether ketone), POM (polyacetal), PSF (polysulfone), PA6 (polyamide 6), and PPS (polyphenylene sulfide). The flying target material 1612 of the present embodiment is not limited to crystalline resins, but may also be, for example, PC (polycarbonate), ABS (acrylonitrile-butadiene-styrene), and PEI (polyether imide), which are amorphous resins, and mixture resins of crystalline and amorphous resins.

The flying target material 1612 may be formed of various materials such as metals, ceramics, and liquids, in addition to resins. The flying target material 1612 may be a material having a viscosity of 1 Pa • s or higher.

In the present embodiment, the bearing member 1611 bears the flying target material 1612 on a circumferential surface thereof by an intermolecular force (Van der Waals force). When the flying target material 1612 has a high resistance value, the bearing member 1611 can bear the flying target material only by an electrostatic attracting force.

A flying target material feeding unit 1620 configured to feed the flying target material 1612 to the circumferential surface (surface) of the bearing member 1611 is disposed around the bearing member 1611.

The flying target material feeding unit 1620 includes a mesh roller 1621 internally loaded with the flying target material 1612 and configured to rotate in the direction of the arrow, and a blade 1622 configured to slide on the flying target material 1612 and rub the flying target material 1612 in the mesh roller 1621. The flying target material feeding unit 1620 causes the blade 1622 to slide on and rub the flying target material 1612 to loosen aggregation of the flying target material 1612 and pass the flying target material 1612 through the mesh roller 1621, to form a thin film (layer) of the flying target material 1612 on the circumferential surface of the bearing member 1611.

The mesh size of the mesh of the mesh roller 1621 is preferably greater than the average particle diameter of the flying target material 1612 by from 20% through 30%. A mesh formed of woven metallic wires can be used as the mesh roller 1621, but a flat mesh produced by, for example, electroforming is more preferable.

Feeding by the flying target material feeding unit 1620 is not limited to by a mesh roller. It is optional to employ, for example, contact feeding by a rotating member, contactless feeding, contactless sprinkling from above a mesh, and fluidized bed coating by powder air flow stirring. A light irradiator 1602 serving as a unit configured to fly the flying target material 1612 from the circumferential surface of the bearing member 1611 is disposed inside the bearing member 1611.

The light irradiator 1602 has the same configuration as any of the embodiments described above, and is configured to irradiate the flying target material 1612 with a pulsed laser beam 1603 for flying and a laser beam 1604 for fixing from inside the bearing member 1611. The position at which the flying target material 1612 is irradiated with the laser beam 1604 for fixing corresponds to the position at which an object is produced.

Being irradiated with the laser beam 1603 for flying, the flying target material 1612 flies from the circumferential surface of the bearing member 1611 in the irradiating direction of the laser beam 1603 for flying.

The flying target material 1612 attached on the object 1630 is heated and melted by irradiation with the laser beam 1604 for fixing, and then cools and integrates with the object 1630. In this way, the object 1630 grows by at least one flying target material.

In this way, the operation of flying the flying target material 1612 by the laser beam 1603 for flying while conveying the flying target material 1612 by continuous rotation of the bearing member 1611 and the operation of heating and melting the attached flying target material 1612 by the laser beam 1604 for fixing to fix the flying target material 1612 on the surface of the object 1630 are repeated until object production is completed.

In this way, it is possible to grow the object 1630 to a shape needed, and produce a three-dimensional object.

In the present embodiment, a fixing method example of melting the flying target material 1612 attached on the object 1630 by irradiation with the laser beam 1604 for fixing has been illustrated. This is non-limiting. The present embodiment can also be applied to a method of attaching the flying target material 1612, flown by irradiation with the laser beam 1603 for flying, on the surface of the object 1630 previously melted by irradiation with the laser beam 1604 for fixing, and subsequently fixing the flying target material 1612 through cooling of the surface of the object 1630. It is possible to carry out this method by delaying the irradiation timing of the laser beam 1603 for flying from the irradiation timing of the laser beam 1604 for fixing.

Examples of the embodiments of the present disclosure have been described above. However, the present disclosure are not limited to these specific embodiments, but various modifications and alterations may be made within the scope of the essentials of the present disclosure.

**Examples**

The present disclosure will be described below by way of Examples. The present disclosure should not be construed as being limited to these Examples.

An image forming apparatus including the flying target material flying unit illustrated in FIG. 11A is used in the following description.

(Example)

<Base material, flying target material, and attaching target>

As the flying target material (light absorbing material), gold was vapor-deposited on a glass slide (obtained from Matsunami Glass Ind., Ltd., MICRO SLIDE GLASS S7213, with a transmittance of 99% to light having a wavelength of 532 nm) serving as a base material.

Next, the base material was set in a manner that the surface of the base material to which the flying target material was applied was faced with an attaching target (transfer medium) and the flying target material could be irradiated with a laser beam perpendicularly from the back of the flying target material.

The clearance (gap) between the attaching target (transfer medium) and the flying target material was set to 200 micrometers.

The laser with which the flying target material was irradiated using the image forming apparatus illustrated in FIG. 11A was as follows.

The flying target material flying unit includes, for example, a laser light source, a laser beam shaping unit, and a laser beam transforming unit.

The flying target material flying unit of the flying body generating apparatus illustrated in FIG. 11A includes a scanning optical system mounted with a galvano scanner.

First, a laser emitted by a Nd:YAG laser light source unit having a wavelength of 1,064 nm was passed through a spatial isolator, a $\lambda/4$ plate, and a collimator lens. An acoustooptic modulator (AOM) time-divided the laser to 0-order light and primary light based on an ON/OFF signal from a PC and a controller. In this way, the frequency of the laser light source was controlled. The 0-order light was cut when passing through mirrors and lenses, and only the primary light passed a nonlinear optical crystal (SHG element). As a result, under nonlinear optical effects, a second harmonic (SHG) was generated, and green light having a wavelength of 532 nm was generated. A harmonic separator HS obtained a laser beam having a single color of green by separating a fundamental harmonic and a second harmonic from each other. The phase distribution and the intensity distribution of the obtained green light were corrected by aberration correction or by an aspect ratio magnification variation element, and then the green light was passed through a zoom lens to be made incident into the phase distribution converting unit illustrated in FIG. 8 configured to transform incident light into a uniformly heating laser beam.

Subsequently, the uniformly heating laser beam was passed through mirrors, ND, and other optical elements and reflected by a light deflector such as a galvano mirror, so that a surface or an interior of the sample (a flying target material, a magenta ink) was irradiated with the laser beam through a condenser lens (with a focal length of 100 mm). One-shot optical exposure was performed at a laser beam diameter of 100 micrometers, the ratio ho (FWHM/($1/e^2$ width)) of 0.85, a scanning speed of 200 mm/s, and 400 micrometer intervals.

<Evaluation of attaching condition>

FIG. 17A illustrates a remaining donor image on the base material after irradiated with the laser beam (i.e., a residual of the flying target material on the base material after laser irradiation), and FIG. 17B illustrates the image of the transferred flying target material on the attaching target.

From these results, flying by the uniformly heating laser beam did not cause scattering and succeeded in forming adjoining dots definitely at 400 micrometer intervals and clearly separating the dots.

(Comparative Example)

The flying target material was flown in the same manner as in Example, except that unlike in Example, the laser beam shaping unit and the laser beam transforming unit were not used, and a Gaussian laser beam having a laser beam diameter of 100 micrometers was used.

<Evaluation of attaching condition>

FIG. 17C illustrates a remaining donor image on the base material after irradiated with the laser beam, and FIG. 17D illustrates the image of the transferred flying target material on the attaching target.

As illustrated in FIG. 17D, the attached flying target material was so scattered on the attaching target that adjoining dots could not be distinguished from each other, and no substantial shape was observed.

Accordingly, it was found that the transferring ability of the uniformly heating laser beam was better than the transferring ability of the Gaussian laser beam.

[Reference Signs List]

411, 512, 551, 741, 851, 1543, 1611: base material
421, 751, 853, 1612: flying target material
431, 433, 711, 812, 813, 1532, 1603: laser beam

**Claims**

**1.** An image forming method comprising:

irradiating a base material (411, 512, 551, 741, 851, 1543, 1611) from a surface thereof opposite to a surface including a flying target material (421, 751, 853, 1612) in at least a part of the surface, with a laser beam in a manner that a uniformly heated region having an approximately uniform temperature distribution higher than or equal to a melting point of the flying target material (421, 751, 853, 1612) is generated at an interface between the base material (411, 512, 551, 741, 851, 1543, 1611) and the flying target material, to fly the flying target material in an irradiating direction of the laser beam,
**characterized by**
forming, by a laser beam shaping unit, a desired cross-sectional shape and a desired transmitted wavefront of an incident laser beam,
irradiating the base material (411, 512, 551, 741, 851, 1543, 1611) with the incident laser beam,
and
transferring, by a transfer unit, the flying target material flown by the laser beam to a transfer medium.

**2.** The image forming method according to claim 1,
wherein an energy intensity distribution of the laser beam (431, 433, 711, 812, 813, 1532, 1603) in a cross-section of the laser beam (431, 433, 711, 812, 813, 1532, 1603) orthogonal to a travelling direction of the laser beam (431, 433, 711, 812, 813, 1532, 1603) is approximately uniform.

3. The image forming method according to claim 1 or 2,
wherein a ratio ho (FWHM/(1/e$^2$ width)) between Full Width at Half Maximum (FWHM) and 1/e$^2$ width of an energy intensity distribution of the laser beam (431, 433, 711, 812, 813, 1532, 1603) in a cross-section of the laser beam (431, 433, 711, 812, 813, 1532, 1603) orthogonal to a travelling direction of the laser beam (431, 433, 711, 812, 813, 1532, 1603) satisfies 0.6<ho<1.

4. The image forming method according to any one of claims 1 to 3,
wherein an assisting film configured to assist in flying is provided between the base material (411, 512, 551, 741, 851, 1543, 1611) and the flying target material (421, 751, 853, 1612).

5. The image forming method according to claim 4,
wherein the assisting film includes a light absorbing region that absorbs the laser beam (431, 433, 711, 812, 813, 1532, 1603) and a non-light absorbing region that does not absorb the laser beam (431, 433, 711, 812, 813, 1532, 1603).

6. The image forming method according to any one of claims 1 to 5,
wherein fluence $F_B$ of the laser beam (431, 433, 711, 812, 813, 1532, 1603) on the surface of the base material (411, 512, 551, 741, 851, 1543, 1611) including the flying target material (421, 751, 853, 1612) is higher than or equal to 20% of fluence $F_F$ of the laser beam (431, 433, 711, 812, 813, 1532, 1603) on the surface of the base material (411, 512, 551, 741, 851, 1543, 1611) irradiated with the laser beam (431, 433, 711, 812, 813, 1532, 1603).

7. The image forming method according to any one of claims 1 to 6,
wherein a diameter of the laser beam (431, 433, 711, 812, 813, 1532, 1603) with which the base material (411, 512, 551, 741, 851, 1543, 1611) is irradiated is 20 micrometers or greater but 200 micrometers or less.

8. The image forming method according to any one of claims 1 to 7, wherein the flying target material is a colorant.

9. The image forming method according to any one of claims 1 to 8, wherein an average diameter of the flying target material on the transfer medium after transferred is 100 micrometers or less.

10. A three-dimensional object producing apparatus comprising:

a flying target material flying unit configured to irradiate a base material (411, 512, 551, 741, 851, 1543, 1611) from a surface thereof opposite to a surface including a flying target material (421, 751, 853, 1612) in at least a part of the surface, with a laser beam (431, 433, 711, 812, 813, 1532, 1603), to fly the flying target material (421, 751, 853, 1612) in an irradiating direction of the laser beam (431, 433, 711, 812, 813, 1532, 1603), the flying target material (421, 751, 853, 1612) flying unit comprising a laser beam shaping unit configured to form a desired cross-sectional shape and a desired transmitted wavefront of an incident laser beam, and being configured to irradiate the base material (411, 512, 551, 741, 851, 1543, 1611) with the incident laser beam;
a transfer unit configured to transfer the flying target material (421, 751, 853, 1612) flown by a flying body generating apparatus to a transfer medium; and
a curing unit configured to cure the flying target material (421, 751, 853, 1612) transferred,
**characterized in that**
the three-dimensional object producing apparatus repeats causing the flying body generating apparatus to fly the flying target material (421, 751, 853, 1612) to the flying target material (421, 751, 853, 1612) cured, and subsequently causing the curing unit to cure the flying target material (421, 751, 853, 1612) uncured, to produce a three-dimensional object, and
the laser beam (431, 433, 711, 812, 813, 1532, 1603) is irradiated in a manner that a uniformly heated region having an approximately uniform temperature distribution higher than or equal to a melting point of the flying target material (421, 751, 853, 1612) is generated at an interface between the base material (411, 512, 551, 741, 851, 1543, 1611) and the flying target material (421, 751, 853, 1612).

**Patentansprüche**

1. Bildgebungsverfahren, umfassend

Bestrahlen eines Basismaterials (411, 512, 551, 741, 851, 1543, 1611) von einer Oberfläche desselben, die einer Oberfläche gegenüberliegt, die ein fliegendes Zielmaterial (421, 751, 853, 1612) in mindestens einem Teil der Oberfläche mit einem Laserstrahl in einer Weise, dass ein gleichmäßig erhitzter Bereich mit einer annähernd gleichmäßigen Temperaturverteilung, die höher oder gleich dem Schmelzpunkt des fliegenden Zielmaterials (421, 751, 853, 1612) an einer Grenzfläche zwischen dem Grundmaterial (411, 512, 551, 741, 851, 1543, 1611) und dem fliegenden Zielmaterial erzeugt wird, um das fliegende Zielmaterial in einer Bestrahlungsrichtung des Laserstrahls fliegen zu lassen,

**gekennzeichnet durch**

Bilden einer gewünschten Querschnittsform und einer gewünschten übertragenen Wellenfront eines einfallenden Laserstrahls durch eine Laserstrahlformungseinheit,

Bestrahlen des Grundmaterials (411, 512, 551, 741, 851, 1543, 1611) mit dem einfallenden Laserstrahl und Übertragen des vom Laserstrahl geflogenen fliegenden Zielmaterials durch eine Übertragungseinheit auf ein Übertragungsmedium.

2. Bildgebungsverfahren gemäß Anspruch 1,
   wobei eine Energieintensitätsverteilung des Laserstrahls (431, 433, 711, 812, 813, 1532, 1603) in einem Querschnitt des Laserstrahls (431, 433, 711, 812, 813, 1532, 1603) orthogonal zu einer Bewegungsrichtung des Laserstrahls (431, 433, 711, 812, 813, 1532, 1603) annähernd gleichmäßig ist.

3. Bildgebungsverfahren gemäß Anspruch 1 oder 2,
   wobei ein Verhältnis ho (FWHM/(1/e$^2$ Breite)) zwischen der Halbwertsbreite (FWHM) und der 1/e$^2$ Breite einer Energieintensitätsverteilung des Laserstrahls (431, 433, 711, 812, 813, 1532, 1603) in einem Querschnitt des Laserstrahls (431, 433, 711, 812, 813, 1532, 1603) orthogonal zu einer Ausbreitungsrichtung des Laserstrahls (431, 433, 711, 812, 813, 1532, 1603) 0.6<ho<1 erfüllt.

4. Bildgebungsverfahren gemäß einem der Ansprüche 1 bis 3,
   wobei ein Hilfsfilm, der beim Fliegen unterstützt, zwischen dem Basismaterial (411, 512, 551, 741, 851, 1543, 1611) und dem fliegenden Zielmaterial (421, 751, 853, 1612) vorgesehen ist.

5. Bildgebungsverfahren gemäß Anspruch 4,
   wobei der Hilfsfilm einen lichtabsorbierenden Bereich umfasst, der den Laserstrahl absorbiert (431, 433, 711, 812, 813, 1532, 1603) absorbiert, und einen nicht lichtabsorbierenden Bereich, der den Laserstrahl (431, 433, 711, 812, 813, 1532, 1603) nicht absorbiert.

6. Bildgebungsverfahren gemäß einem der Ansprüche 1 bis 5,
   wobei die Fluenz $F_B$ des Laserstrahls (431, 433, 711, 812, 813, 1532, 1603) auf der Oberfläche des Basismaterials (411, 512, 551, 741, 851, 1543, 1611) einschließlich des fliegenden Zielmaterials (421, 751, 853, 1612) größer oder gleich 20 % der Fluenz $F_{(F)}$ des Laserstrahls (431, 433, 711, 812, 813, 1532, 1603) auf der Oberfläche des mit dem Laserstrahl (431, 433, 711, 812, 813, 1532, 1603) bestrahlt wird.

7. Bildgebungsverfahren gemäß einem der Ansprüche 1 bis 6,
   wobei ein Durchmesser des Laserstrahls (431, 433, 711, 812, 813, 1532, 1603), mit dem das Basismaterial (411, 512, 551, 741, 851, 1543, 1611) bestrahlt wird, 20 Mikrometer oder mehr, jedoch 200 Mikrometer oder weniger beträgt.

8. Bildgebungsverfahren nach einem der Ansprüche 1 bis 7, wobei das fliegende Zielmaterial ein Farbstoff ist.

9. Bildgebungsverfahren nach einem der Ansprüche 1 bis 8, wobei der durchschnittliche Durchmesser des fliegenden Zielmaterials auf dem Transfermedium nach dem Transfer 100 Mikrometer oder weniger beträgt.

10. Vorrichtung zur Herstellung dreidimensionaler Objekte, umfassend:

    eine Flugzielmaterial-Flugvorrichtung, die so konfiguriert ist, dass sie ein Basismaterial (411, 512, 551, 741, 851, 1543, 1611) von einer Oberfläche desselben aus bestrahlt, die einer Oberfläche gegenüberliegt, die ein Flugzielmaterial (421, 751, 853, 1612) in mindestens einem Teil der Oberfläche mit einem Laserstrahl (431, 433, 711, 812, 813, 1532, 1603) zu bestrahlen, um das fliegende Zielmaterial (421, 751, 853, 1612) in einer Bestrahlungsrichtung des Laserstrahls (431, 433, 711, 812, 813, 1532, 1603) fliegen zu lassen, wobei die Flugzielmaterial-Flugvorrichtung (421, 751, 853, 1612) fliegende Einheit, die eine Laserstrahlformungseinheit umfasst, die so konfiguriert ist, dass sie eine gewünschte Querschnittsform und eine gewünschte durchgelassene Wellenfront eines einfallenden Laserstrahls bildet, und die so konfiguriert ist, dass sie das Grundmaterial (411, 512, 551, 741, 851, 1543, 1611) mit dem einfallenden Laserstrahl bestrahlt;

eine Übertragungseinheit, die so konfiguriert ist, dass sie das von einer Flugkörpererzeugungsvorrichtung geflogene Flugzielmaterial (421, 751, 853, 1612) auf ein Übertragungsmedium überträgt; und

eine Aushärtungseinheit, die so konfiguriert ist, dass sie das übertragene fliegende Zielmaterial (421, 751, 853, 1612) aushärtet,

**dadurch gekennzeichnet, dass**

die Vorrichtung zur Erzeugung dreidimensionaler Objekte den Vorgang wiederholt, bei dem die Vorrichtung zur Erzeugung fliegender Körper das fliegende Zielmaterial (421, 751, 853, 1612) zum fliegenden Zielmaterial (421, 751, 853, 1612) fliegen lässt, das ausgehärtet ist, und anschließend die Aushärtungseinheit veranlasst, das fliegende Zielmaterial (421, 751, 853, 1612), das nicht ausgehärtet ist, aushärten zu lassen, um ein dreidimensionales Objekt herzustellen, und

der Laserstrahl (431, 433, 711, 812, 813, 1532, 1603) so bestrahlt wird, dass ein gleichmäßig erwärmter Bereich mit einer annähernd gleichmäßigen Temperaturverteilung, die höher oder gleich dem Schmelzpunkt des fliegenden Zielmaterials (421, 751, 853, 1612) erzeugt wird.


## Revendications

1. Procédé de formation d'image comprenant :

   l'irradiation d'un matériau de base (411, 512, 551, 741, 851, 1543, 1611) par une surface de celui-ci qui est opposée à une surface présentant un matériau cible volant (421, 751, 853, 1612) dans au moins une partie de la surface, à l'aide d'un faisceau laser de façon qu'une zone uniformément chauffée, ayant une distribution de température approximativement uniforme supérieure ou égale au point de fusion du matériau cible volant (421, 751, 853, 1612), soit générée sur une interface entre le matériau de base (411, 512, 551, 741, 851, 1543, 1611) et le matériau cible volant, pour faire voler le matériau cible volant dans la direction de rayonnement du faisceau laser,

   **caractérisé par**

   la formation, par une unité de mise en forme de faisceau laser, d'une forme de section transversale souhaitée et d'un front d'onde transmis souhaité propres à un faisceau laser incident,

   l'irradiation du matériau de base (411, 512, 551, 741, 851, 1543, 1611) à l'aide du faisceau laser incident, et le transfert, par une unité de transfert, du matériau cible volant que le faisceau laser fait voler vers un support de transfert.

2. Procédé de formation d'image selon la revendication 1,
   dans lequel la distribution d'intensité d'énergie du faisceau laser (431, 433, 711, 812, 813, 1532, 1603) dans une section transversale du faisceau laser (431, 433, 711, 812, 813, 1532, 1603) orthogonale à la direction de déplacement du faisceau laser (431, 433, 711, 812, 813, 1532, 1603) est approximativement uniforme.

3. Procédé de formation d'image selon la revendication 1 ou 2,
   dans lequel un rapport ho (FWHM/(largeur à $1/e^2$)) entre la largeur à mi-hauteur (FWHM) et une largeur à $1/e^2$ de la distribution d'intensité d'énergie du faisceau laser (431, 433, 711, 812, 813, 1532, 1603) dans une section transversale du faisceau laser (431, 433, 711, 812, 813, 1532, 1603) orthogonale à la direction de déplacement du faisceau laser (431, 433, 711, 812, 813, 1532, 1603) satisfait l'expression 0,6 < ho < 1.

4. Procédé de formation d'image selon l'une quelconque des revendications 1 à 3,
   dans lequel un film d'assistance conçu pour faciliter le vol est fourni entre le matériau de base (411, 512, 551, 741, 851, 1543, 1611) et le matériau cible volant (421, 751, 853, 1612).

5. Procédé de formation d'image selon la revendication 4,
   dans lequel le film d'assistance présente une zone d'absorption de lumière qui absorbe le faisceau laser (431, 433, 711, 812, 813, 1532, 1603) et une zone de non-absorption de lumière qui n'absorbe pas le faisceau laser (431, 433, 711, 812, 813, 1532, 1603).

6. Procédé de formation d'image selon l'une quelconque des revendications 1 à 5,
   dans lequel la fluence $F_B$ du faisceau laser (431, 433, 711, 812, 813, 1532, 1603) sur la surface du matériau de base (411, 512, 551, 741, 851, 1543, 1611) présentant le matériau cible volant (421, 751, 853, 1612) est supérieure ou égale à 20 % de la fluence $F_F$ du faisceau laser (431, 433, 711, 812, 813, 1532, 1603) sur la surface du matériau de base (411, 512, 551, 741, 851, 1543, 1611) irradiée à l'aide du faisceau laser (431, 433, 711, 812, 813, 1532, 1603).

7. Procédé de formation d'image selon l'une quelconque des revendications 1 à 6,
dans lequel le diamètre du faisceau laser (431, 433, 711, 812, 813, 1532, 1603) à l'aide duquel le matériau de base (411, 512, 551, 741, 851, 1543, 1611) est irradié est de 20 micromètres ou plus et de 200 micromètres ou moins.

8. Procédé de formation d'image selon l'une quelconque des revendications 1 à 7, dans lequel le matériau cible volant est un colorant.

9. Procédé de formation d'image selon l'une quelconque des revendications 1 à 8, dans lequel le diamètre moyen du matériau cible volant présent sur le support de transfert après avoir été transféré est de 100 micromètres ou moins.

10. Appareil de production d'objet tridimensionnel comprenant :

une unité destinée à faire voler un matériau cible volant et conçue pour irradier un matériau de base (411, 512, 551, 741, 851, 1543, 1611) par une surface de celui-ci qui est opposée à une surface présentant un matériau cible volant (421, 751, 853, 1612) dans au moins une partie de la surface, à l'aide d'un faisceau laser (431, 433, 711, 812, 813, 1532, 1603), pour faire voler le matériau cible volant (421, 751, 853, 1612) dans la direction de rayonnement du faisceau laser (431, 433, 711, 812, 813, 1532, 1603), l'unité destinée à faire voler le matériau cible volant (421, 751, 853, 1612) comprenant une unité de mise en forme de faisceau laser conçue pour former une forme de section transversale souhaitée et un front d'onde transmis souhaité à un faisceau laser incident, et étant configurée pour irradier le matériau de base (411, 512, 551, 741, 851, 1543, 1611) à l'aide du faisceau laser incident ;
une unité de transfert conçue pour transférer le matériau cible volant (421, 751, 853, 1612), qu'un appareil de génération de corps volant fait voler, vers un support de transfert ; et
une unité de séchage conçue pour sécher le matériau cible volant (421, 751, 853, 1612) transféré,
**caractérisé en ce que**
l'appareil de production d'objet tridimensionnel amène l'appareil de génération de corps volant, de façon répétée, à faire voler le matériau cible volant (421, 751, 853, 1612) vers le matériau cible volant (421, 751, 853, 1612) séché, et subséquemment à faire sécher le matériau cible volant (421, 751, 853, 1612) non séché par l'unité de séchage, afin de produire un objet tridimensionnel, et
le faisceau laser (431, 433, 711, 812, 813, 1532, 1603) est rayonné de façon qu'une zone uniformément chauffée, ayant une distribution de température approximativement uniforme supérieure ou égale au point de fusion du matériau cible volant (421, 751, 853, 1612), soit générée sur une interface entre le matériau de base (411, 512, 551, 741, 851, 1543, 1611) et le matériau cible volant (421, 751, 853, 1612).

[Fig. 1A]

[Fig. 1B]

[Fig. 2]

[Fig. 3A]

[Fig. 3B]

[Fig. 4A]

432

431

411

421

441

[Fig. 4B]

411

421

441

[Fig. 4C]

411

421

441

[Fig. 4D]

434

433

411

421

441

[Fig. 4E]

411

421

441

[Fig. 4F]

411

421

441

[Fig. 5A]

[Fig. 5B]

[Fig. 5C]

[Fig. 6]

[Fig. 7A]

301

[Fig. 7B]

302

[Fig. 8]

[Fig. 9]

[Fig. 10A]

[Fig. 10B]

[Fig. 11A]

[Fig. 11B]

[Fig. 12]

[Fig. 13]

[Fig. 14]

[Fig. 15A]

[Fig. 15B]

[Fig. 15C]

[Fig. 15D]

[Fig. 16A]

[Fig. 16B]

[Fig. 16C]

[Fig. 16D]

[Fig. 16E]

[Fig. 16F]

[Fig. 16G]

[Fig. 17A]

[Fig. 17B]

[Fig. 17C]

[Fig. 17D]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016136722 A

- JP 2012143787 A

**Non-patent literature cited in the description**

- **TOLBERT W A et al.** Laser ablation transfer imaging using picosecond optical pulses: Ultra-high speed, lower threshold and high resolution. *Journal of Imaging Science and Technology, SPIE - The International Society for Optical Engineering*, vol. 37 (5), 485-489

- **E. TURKOZ** ; **L. DEIKE** ; **C. B. ARNOLD**. Comparison of jets from Newtonian and non-Newtonian fluids induced by blister-actuated laser-induced forward transfer (BA-LIFT). *Appl. Phys. A*, 2017, vol. 123, 652